# EUROPEAN PATENT SPECIFICATION

(11) **EP 4 123 412 B1**
(45) Date of publication and mention of the grant of the patent: **18.11.2026**
(21) Application number: 20925218.8
(22) Date of filing: 17.03.2020
(51) Int. Cl.: G05F 1/70, H02M 7/48, H02J 3/01, H02J 3/18

(54) **POWER CONVERSION DEVICE**
STROMUMWANDLUNGSVORRICHTUNG
DISPOSITIF DE CONVERSION DE PUISSANCE

(43) Date of publication of application: 25.01.2023
(73) Proprietor: MITSUBISHI ELECTRIC CORPORATION, Chiyoda-ku Tokyo 100-8310 (JP)
(72) Inventor: TOI, Takato, Tokyo 100-8310 (JP); KAJIYAMA, Takuya, Tokyo 100-8310 (JP); FUJII, Toshiyuki, Tokyo 100-8310 (JP)
(74) Representative: Meissner Bolte Partnerschaft mbB
(86) International application number: PCT/JP2020/011610
(87) International publication number: WO 2021/186524

(56) References cited:
- WO-A2-2011/124223
- CN-A- 106 655 213
- CN-A- 109 473 987
- CN-A- 110 176 787
- CN-A- 110 323 756
- JP-A- 2003 061 250
- JP-A- H0 549 172
- ROCHA JESSICA P M ET AL: "Provision of ancillary service in a grid-connected photovoltaic power system", 2018 IEEE APPLIED POWER ELECTRONICS CONFERENCE AND EXPOSITION (APEC), IEEE, 4 March 2018 (2018-03-04), pages 2355 - 2361, XP033347615, DOI: 10.1109/APEC.2018.8341345
- MORAN L ET AL: "A SIMPLE AND LOW COST CONTROL STRATEGY FOR ACTIVE POWER FILTERS CONNECTED IN CASCADE", PROCEEDINGS OF THE 1995 IEEE IECON: INTERNATIONAL CONFERENCE ON INDUSTRIAL ELECTRONICS, CONTROL, AND INSTRUMENTATION. ORLANDO, NOV. 6 - 10, 1995. PLENARY SESSION, INVITED SESSIONS, AND POWER ELECTRONICS; [PROCEEDINGS OF THE INTERNATIONAL CONFERENCE O, vol. 1, 6 November 1995 (1995-11-06), pages 463 - 468, XP000586502, ISBN: 978-0-7803-3027-6
- CHEN Z ET AL: "A study of parallel operations of active and passive filters", POWER ELECTRONICS SPECIALISTS CONFERENCE; [ANNUAL POWER ELECTRONICS SPECIALISTS CONFERENCE],, vol. 2, 23 June 2002 (2002-06-23), pages 1021 - 1026, XP010747398, ISBN: 978-0-7803-7262-7, DOI: 10.1109/PSEC.2002.1022589

## Description

### TECHNICAL FIELD

The present invention relates to a power conversion device.

### BACKGROUND ART

In an AC grid to which a load is connected, a power conversion device is connected for compensating for harmonic currents. In a conventional power conversion device, harmonic detection means provided for each harmonic order detects a harmonic component in load current separately on a harmonic-order basis, and a compensation current command value for each harmonic is generated to perform output control of the power conversion device. Thus, the compensation ratio can be easily set, and a compensation gain and a compensation capacitance limiter can be set individually for each order, whereby it is possible to compensate for only a harmonic for a specific order (see, for example, Patent Document 1).

ROCHA JESSICA P M ET AL: "Provision of ancillary service in a grid-connected photovoltaic power system" relates to provision of ancillary service (AS) of harmonic compensation of a distributed generation (DG) connected in a distribution network.

MORAN LET AL: "A SIMPLE AND LOW COST CONTROL STRATEGY FOR ACTIVE POWER FILTERS CONNECTED IN CASCADE" relates to a simple and low cost control strategy for active power filters implemented with PWM voltage-source inverters connected in cascade.

CN110323756A relates to the technical field of circuit design, in particular to an active power filtering circuit capable of being used for harmonic compensation.

CN106655213A relates to the use of power electronic technology in power systems, and more particularly to a control method of a parallel type active power filter.

### CITATION LIST

### PATENT DOCUMENT

Patent Document 1: Japanese Laid-Open Patent Publication JP 5- 049 172 A

### SUMMARY OF THE INVENTION

### PROBLEMS TO BE SOLVED BY THE INVENTION

In a conventional power conversion device, harmonic compensation can be performed by setting a limit individually for each harmonic order, but in some cases, voltage and current that the power conversion device can output cannot be sufficiently used.

The present invention has been made to solve the above problem, and an object of the present invention is to provide a power conversion device that effectively performs harmonic compensation for each harmonic order while promoting usage of voltage and current that the power conversion device can output.

### SOLUTION TO THE PROBLEMS

According to the invention, the problem is solved by the subject matter outlined in independent claim 1. Advantageous further developments of the invention are set forth in the dependent claims.

### EFFECT OF THE INVENTION

The power conversion device according to the present invention makes it possible to effectively perform harmonic compensation for each harmonic order while promoting usage of voltage and current that the power conversion device can output.

### BRIEF DESCRIPTION OF THE DRAWINGS

FIG. 1 is a block diagram showing a schematic configuration of a power conversion device according to Embodiment 1.
FIG. 2 shows an example of a circuit configuration of a power converter according to Embodiment 1.
FIG. 3 shows another example of a circuit configuration of a power converter according to Embodiment 1.
FIG. 4 shows another example of a circuit configuration of a power converter according to Embodiment 1.
FIG. 5 shows an example of a circuit configuration of a converter cell in the power converter according to Embodiment 1.
FIG. 6 shows another example of a circuit configuration of a converter cell in the power converter according to Embodiment 1.
FIG. 7 shows another example of a circuit configuration of a power converter according to Embodiment 1.
FIG. 8 shows a configuration of a current command generation unit of the power conversion device according to Embodiment 1.
FIG. 9 shows a configuration of a limit coefficient calculation unit of the power conversion device according to Embodiment 1.
FIG. 10 shows a configuration of a voltage limitation value generation unit in the limit coefficient calculation unit according to Embodiment 1.
FIG. 11 shows a configuration of a current limitation value generation unit in the limit coefficient calculation unit according to Embodiment 1.
FIG. 12 shows a configuration of a coefficient calculating unit in the limit coefficient calculation unit according to Embodiment 1.
FIG. 13 shows a configuration of a current command generation unit of a power conversion device according to Embodiment 2.
FIG. 14 shows a schematic configuration of a limit coefficient calculation unit of the power conversion device according to Embodiment 2.
FIG. 15 shows a detailed configuration of the limit coefficient calculation unit of the power conversion device according to Embodiment 2.
FIG. 16 is a block diagram showing a schematic configuration of a power conversion device according to Embodiment 3.
FIG. 17 shows a configuration of a current command generation unit of the power conversion device according to Embodiment 3.
FIG. 18 shows a configuration of a limit coefficient calculation unit of the power conversion device according to Embodiment 3.
FIG. 19 shows a configuration of a voltage limitation value generation unit in the limit coefficient calculation unit according to Embodiment 3.
FIG. 20 shows a configuration of a current limitation value generation unit in the limit coefficient calculation unit according to Embodiment 3.
FIG. 21 shows a configuration of a coefficient calculating unit in the limit coefficient calculation unit according to Embodiment 3.
FIG. 22 shows a configuration of a current command generation unit of a power conversion device according to Embodiment 4.
FIG. 23 shows a schematic configuration of a limit coefficient calculation unit of a power conversion device according to Embodiment 4.
FIG. 24 shows a detailed configuration of the limit coefficient calculation unit of the power conversion device according to Embodiment 4.
FIG. 25 is a block diagram showing a schematic configuration of a power conversion device according to Embodiment 5.
FIG. 26 shows a configuration of a voltage limitation value generation unit in a limit coefficient calculation unit according to Embodiment 6.
FIG. 27 shows a configuration of a current limitation value generation unit in a limit coefficient calculation unit according to another example of Embodiment 6.
FIG. 28 shows a configuration of a circuit for calculating a voltage maximum value of an AC grid according to Embodiment 7.

### DESCRIPTION OF EMBODIMENTS

### Embodiment 1

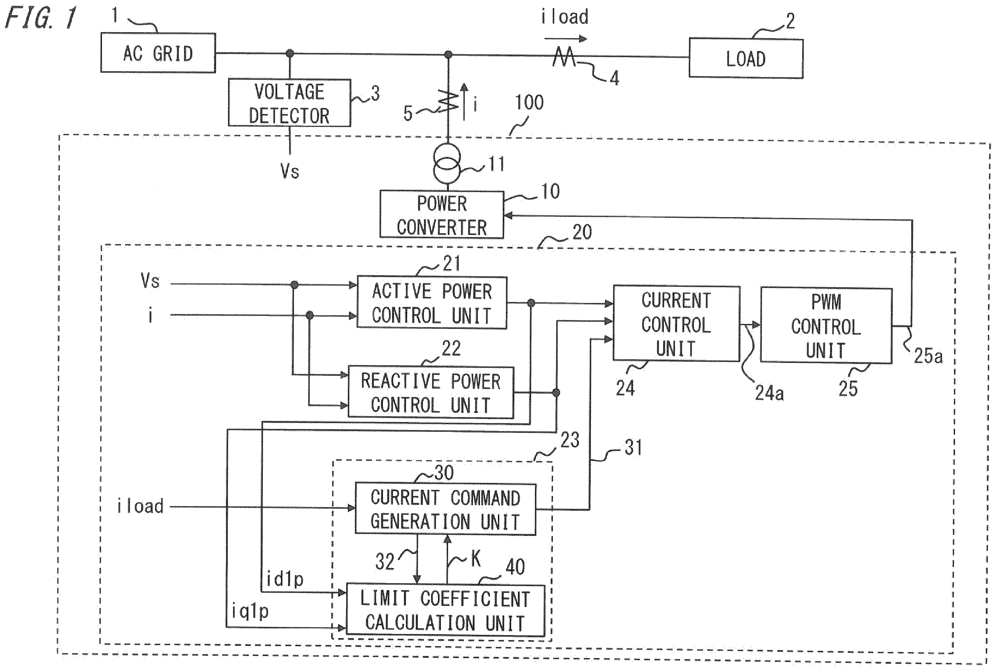

FIG. 1 is a block diagram showing a schematic configuration of a power conversion device according to Embodiment 1.

As shown in FIG. 1, in a power system in which a load 2 is connected to a three-phase (U phase, V phase, W phase) AC grid 1, a power conversion device 100 is connected to the AC grid 1, in parallel to the load 2. The power conversion device 100 includes a power converter 10 and a control circuit 20 for performing output control of the power converter 10, and the power converter 10 is connected to the AC grid 1 via a transformer 11.

A voltage detector 3 and current detectors 4, 5 are provided for detecting voltage and currents at respective parts. The voltage detector 3 detects interconnection point voltage Vs (Vsu, Vsv, Vsw) which is voltage of the AC grid 1 interconnected with the power converter 10. The current detector 4 detects load current iload (iloadu, iloadv, iloadw) flowing from the AC grid 1 to the load 2, and the current detector 5 detects output current i (iu, iv, iw) outputted from the power converter 10 to the AC grid 1.

The control circuit 20 performs switching control of switching elements in the power converter 10 on the basis of input information (interconnection point voltage Vs, load current iload, output current i) from the voltage detector 3 and the current detectors 4, 5, thereby performing output control of the power converter 10.

The control circuit 20 includes an active power control unit 21, a reactive power control unit 22, a harmonic compensation unit 23, a current control unit 24, and a pulse width modulation (PWM) control unit 25.

In the present embodiment, a case of outputting a fundamental positive-phase-sequence component (first-order positive-phase-sequence component) and also compensating for harmonics will be described. Here, frequency components other than a fundamental positive-phase-sequence component, i.e., including a fundamental negative-phase-sequence component, are treated as harmonics.

The active power control unit 21 and the reactive power control unit 22 generate an active current command id1p and a reactive current command iq1p as a first current command for the fundamental positive-phase-sequence component. The active power control unit 21 and the reactive power control unit 22 each receive values of interconnection point voltage Vs and output current i from the voltage detector 3 and the current detector 5. Then, the active power control unit 21 generates a d-axis current command as the active current command id1p for the fundamental positive-phase-sequence component on the basis of active power of the AC grid 1. The reactive power control unit 22 generates a q-axis current command as the reactive current command iq1p for the fundamental positive-phase-sequence component on the basis of reactive power of the AC grid 1.

The harmonic compensation unit 23 includes a current command generation unit 30 and a limit coefficient calculation unit 40, and generates compensation current commands 31 for compensating for a plurality of frequency components that are harmonic currents by compensation currents.

The current command generation unit 30 receives a value of the load current iload from the current detector 4 and a limit coefficient K generated for each frequency component by the limit coefficient calculation unit 40. Then, the current command generation unit 30 generates a compensation current desired value 32 for each of the plurality of frequency components on the basis of the load current iload, and corrects the compensation current desired value 32 using the limit coefficient K, to generate the compensation current command 31.

The limit coefficient calculation unit 40 receives the active current command id1p and the reactive current command iq1p from the active power control unit 21 and the reactive power control unit 22, and the compensation current desired values 32 from the current command generation unit 30, and generates the limit coefficient K for each frequency component on the basis of the received values.

The current control unit 24 receives the active current command id1p and the reactive current command iq1p from the active power control unit 21 and the reactive power control unit 22, and the compensation current commands 31 from the harmonic compensation unit 23, and generates a voltage command 24a on the basis of an output current command obtained by adding the received values. On the basis of the voltage command 24a, the PWM control unit 25 performs comparison using a carrier wave, to generate a gate signal 25a for switching elements in the power converter 10.

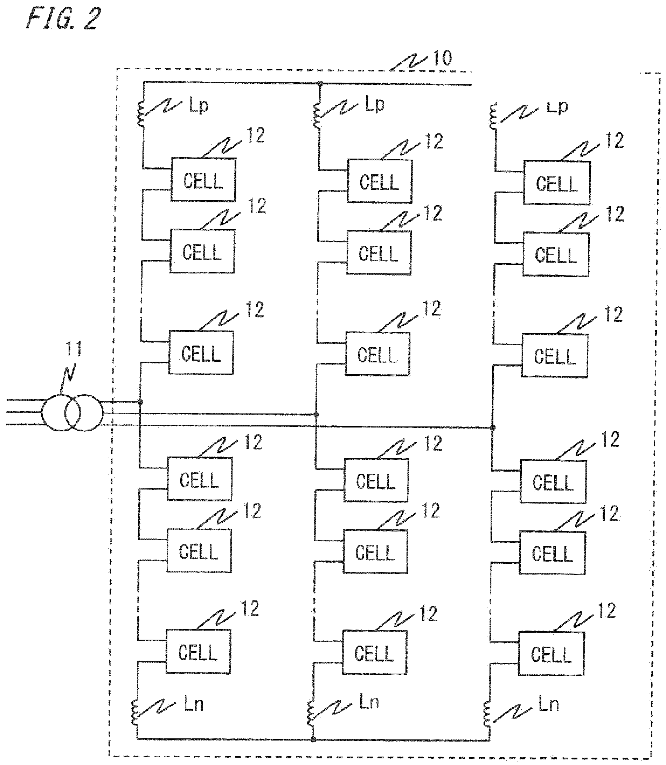

FIG. 2 shows an example of a circuit configuration of the power converter 10.

As shown in FIG. 2, the power converter 10 is configured as a modular multilevel converter (MMC) of a double-star-connection type. In this case, the power converter 10 includes a plurality of converter cells 12 connected in series in each of upper and lower arms for each of three phases connected by double star connection which is an example of star connection, and includes arm reactors Lp, Ln on the positive side and the negative side.

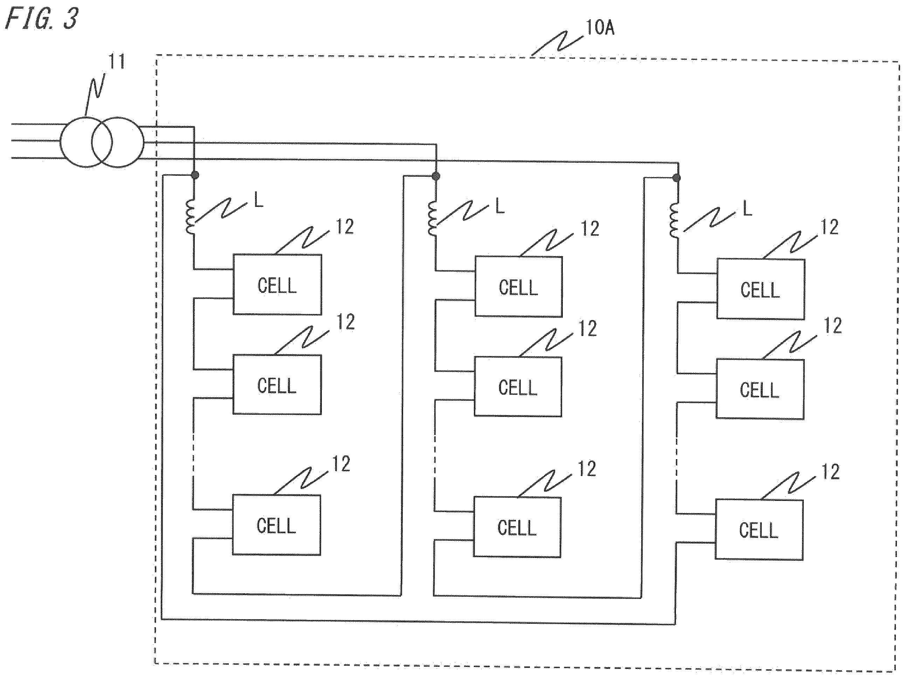

The power converter may have a circuit configuration of a power converter 10A shown in FIG. 3. As shown in FIG. 3, the power converter 10A is configured as a MMC of a delta-connection type. The power converter 10A includes a plurality of converter cells 12 connected in series in each of arms for each of three phases connected by delta connection, and includes arm reactors L.

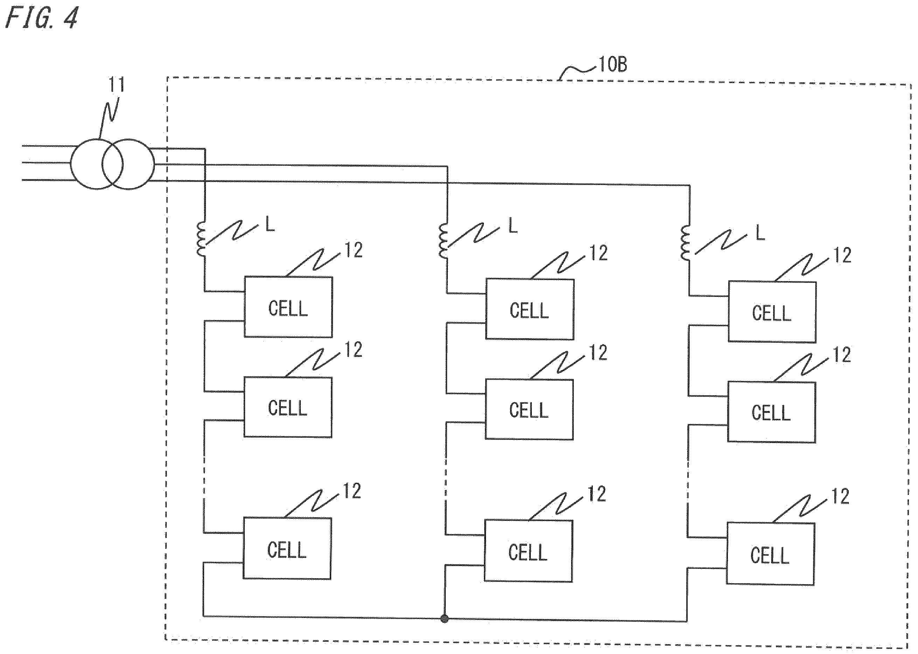

Further, the power converter may have a circuit configuration of a power converter 10B shown in FIG. 4. As shown in FIG. 4, the power converter 10B is configured as a MMC of a single-star-connection type which is another example of star connection. The power converter 10B includes a plurality of converter cells 12 connected in series in each of arms for each of three phases connected by single star connection, and includes arm reactors L.

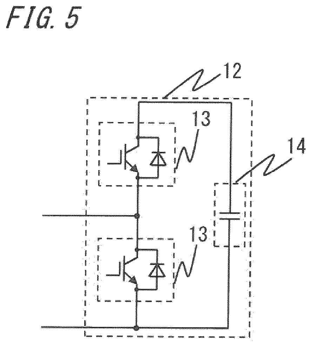

FIG. 5 shows an example of a circuit configuration of the converter cell 12 in the power converter 10, 10A.

As shown in FIG. 5, the converter cell 12 is configured as a half-bridge circuit having two switching elements 13 to which diodes are connected in antiparallel, and a DC capacitor 14. The switching elements 13 are self-turn-off switching elements such as insulated-gate bipolar transistors (IGBT), for example. In the converter cell 12, a connection point between the two switching elements 13 and a DC terminal on the negative side are used as output ends, and two kinds of voltages, i.e., zero voltage and voltage across the DC capacitor 14 are outputted through switching of the switching elements 13.

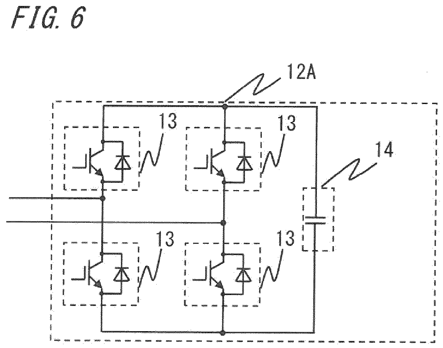

The converter cell may have a circuit configuration of a converter cell 12A shown in FIG. 6. As shown in FIG. 6, the converter cell 12A is configured as a full-bridge circuit in which two legs each formed by series-connection of two switching elements 13 to which diodes are connected in antiparallel are connected in parallel with a DC capacitor 14. In the converter cell 12A, a connection point between the two switching elements 13 in each leg is used as an output end, and three kinds of voltages, i.e., zero voltage and positive and negative voltages across the DC capacitor 14 are outputted through switching of the switching elements 13.

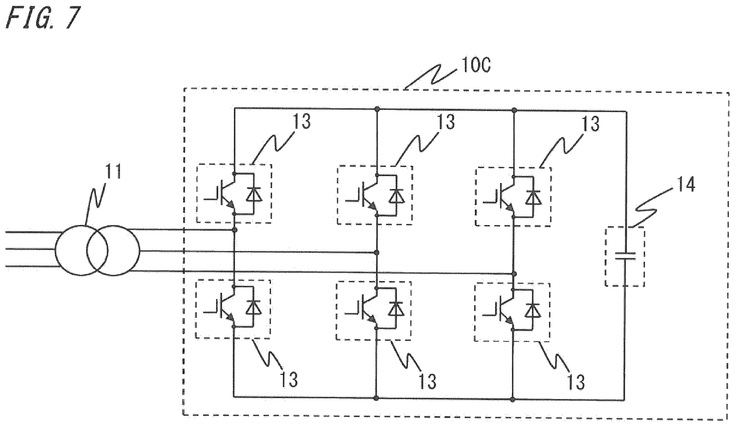

The power converter of the power conversion device 100 may have a circuit configuration of a power converter 10C shown in FIG. 7. As shown in FIG. 7, the power converter 10C is configured as a three-phase 2-level inverter in which three legs each formed by series connection of two switching elements 13 to which diodes are connected in antiparallel are connected in parallel with the DC capacitor 14. A connection point between the two switching elements 13 in each leg is used as an output end for each phase, and positive or negative voltage of the DC capacitor 14 is outputted for each phase through switching of the switching elements 13.

The power conversion device 100 is used for a static synchronous compensator (STATCOM), an active filter, a high voltage direct current (HVDC) system for performing high-voltage DC power transmission, or the like.

The power converter 10 configured as the MMC of a double-star-connection type and the power converter 10C configured as a three-phase 2-level inverter are used for an active filter, a STATCOM, a HVDC system, or the like. The active filter is a device for compensating for a harmonic component in the AC grid 1, and the STATCOM is a device for compensating for reactive power in the AC grid 1. The HVDC system is used for a grid of which the power transmission distance is long, and is a system in which power of an AC grid is forward converted to high-voltage DC power to be transmitted and then the DC power is inversely converted to AC power to be transmitted to another AC grid.

The power converter 10A configured as the MMC of a delta-connection type is used for a distribution-STATCOM (D-STATCOM) for power distribution. The D-STATCOM performs reactive power compensation in a low-order grid close to a load.

The power converter 10B configured as the MMC of a single-star-connection type is used for an active filter, a STATCOM, or the like.

In a case where the power conversion device 100 is used for a device such as the STATCOM or the HVDC system that outputs a fundamental positive-phase-sequence component with highest priority given thereto, it is necessary to perform harmonic compensation while considering the fundamental positive-phase-sequence component outputted from the power converter 10. In addition, since voltage that the power converter 10 can output is limited, it is necessary to appropriately set a limiter for compensation current included in the output current i of the power converter 10, also for preventing overmodulation.

Hereinafter, the configuration and operation of the harmonic compensation unit 23 will be described in detail. The power conversion device 100 according to the present embodiment outputs a fundamental positive-phase-sequence component and also compensates for harmonics with a priority set for each frequency component.

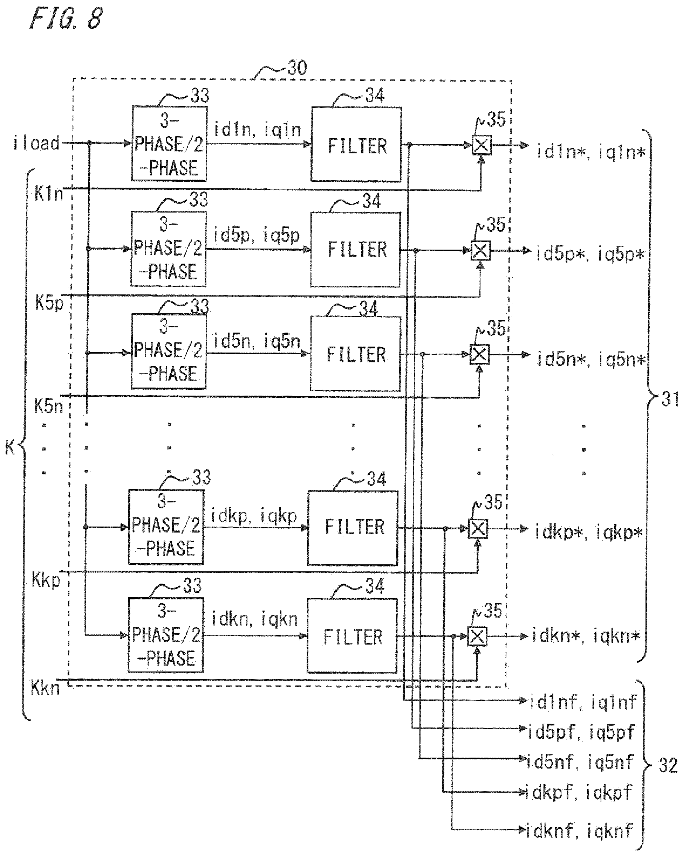

FIG. 8 shows a configuration of the current command generation unit 30 of the harmonic compensation unit 23.

The current command generation unit 30 includes a plurality of coordinate conversion units 33 that perform 3-phase/2-phase rotational coordinate conversion to extract a plurality of frequency components that are harmonic compensation targets, on the basis of the load current iload, and further includes a plurality of filters 34 and a plurality of multipliers 35.

The three-phase load currents iload are subjected to rotational coordinate conversion by each of the plurality of coordinate conversion units 33, to be converted to DC currents for the plurality of frequency components. The plurality of coordinate conversion units 33 are set with different phases for coordinate conversion. For example, in a case of performing conversion to dq-axis currents id1n, iq1n of a fundamental negative-phase-sequence component, coordinate conversion is performed with a negative fundamental component phase, and in a case of performing conversion to dq-axis currents id5p, iq5p of a fifth-order positive-phase-sequence component, coordinate conversion is performed with a positive fifth-order component phase. In this case, the fundamental negative-phase-sequence component, the fifth-order positive-phase-sequence component, a fifth-order negative-phase-sequence component, ..., a kth-order positive-phase-sequence component, and a kth-order negative-phase-sequence component are compensation targets, and dq-axis currents (id1n, iq1n), (id5p, iq5p), (id5n, iq5n), ..., (idkp, iqkp), and (idkn, iqkn) are generated.

The dq-axis currents generated for each frequency component pass the filter 34 by which harmonic components are removed from DC current so that only the frequency component that is the compensation target is extracted. Thus, for the respective frequency components, the compensation current desired values 32, i.e., (id1nf, iq1nf), (id5pf, iq5pf), (id5nf, iq5nf), ..., (idkpf, iqkpf), and (idknf, iqknf) are generated.

Then, at the multiplier 35, the compensation current desired value 32 for each frequency component is multiplied by the limit coefficient K (K1n, K5p, K5n, ..., Kkp, and Kkn) generated for each frequency component by the limit coefficient calculation unit 40. Thus, for the respective frequency components, the compensation current commands 31, i.e., (id1n*, iq1n*), (id5p*, iq5p*), (id5n*, iq5n*), ..., (idkp*, iqkp*), and (idkn*, iqkn*) are generated.

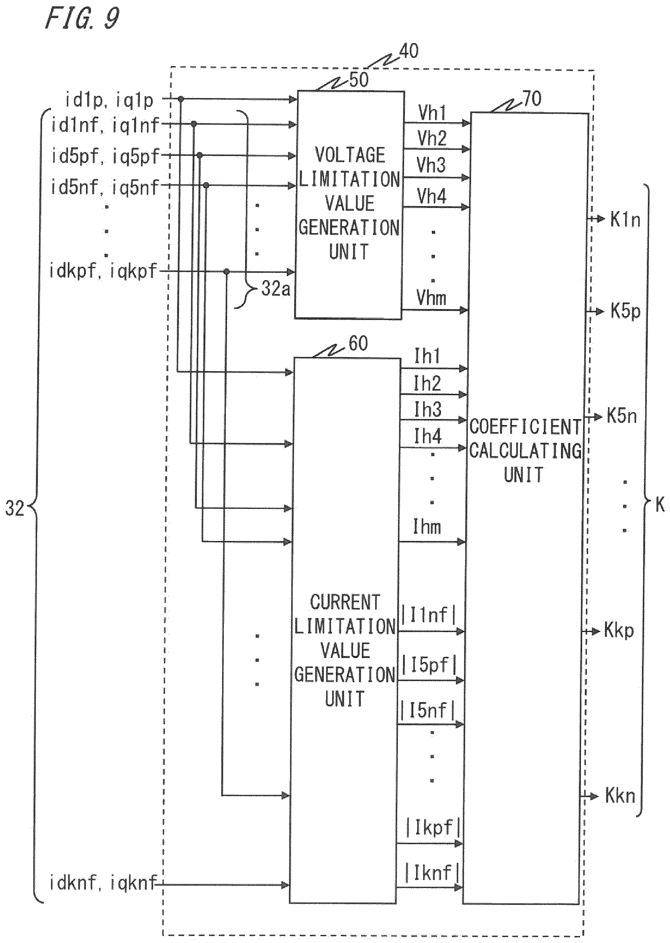

FIG. 9 shows a configuration of the limit coefficient calculation unit 40 of the harmonic compensation unit 23.

The limit coefficient calculation unit 40 includes a voltage limitation value generation unit 50, a current limitation value generation unit 60, and a coefficient calculating unit 70. The limit coefficient calculation unit 40 receives the active current command id1p and the reactive current command iq1p from the active power control unit 21 and the reactive power control unit 22, and the compensation current desired values 32 from the current command generation unit 30, and generates the limit coefficients K (K1n, K5p, K5n, ..., Kkp, and Kkn) for the respective frequency components on the basis of the received values.

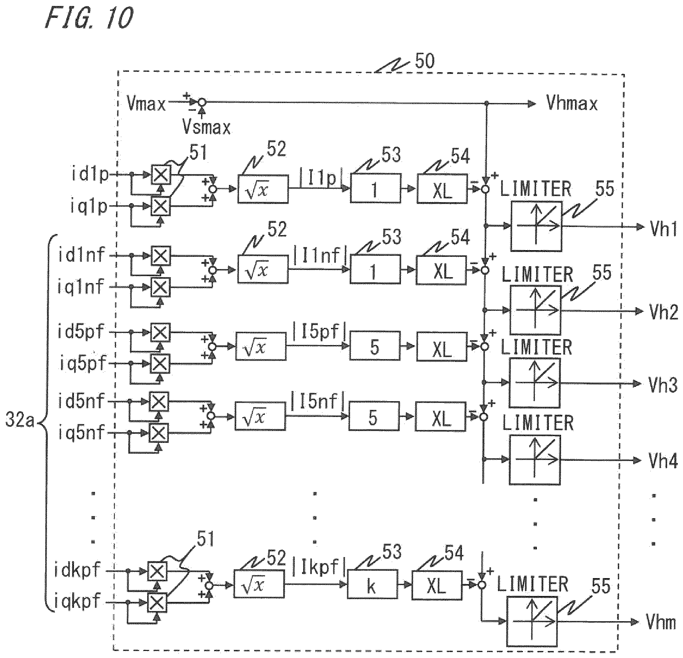

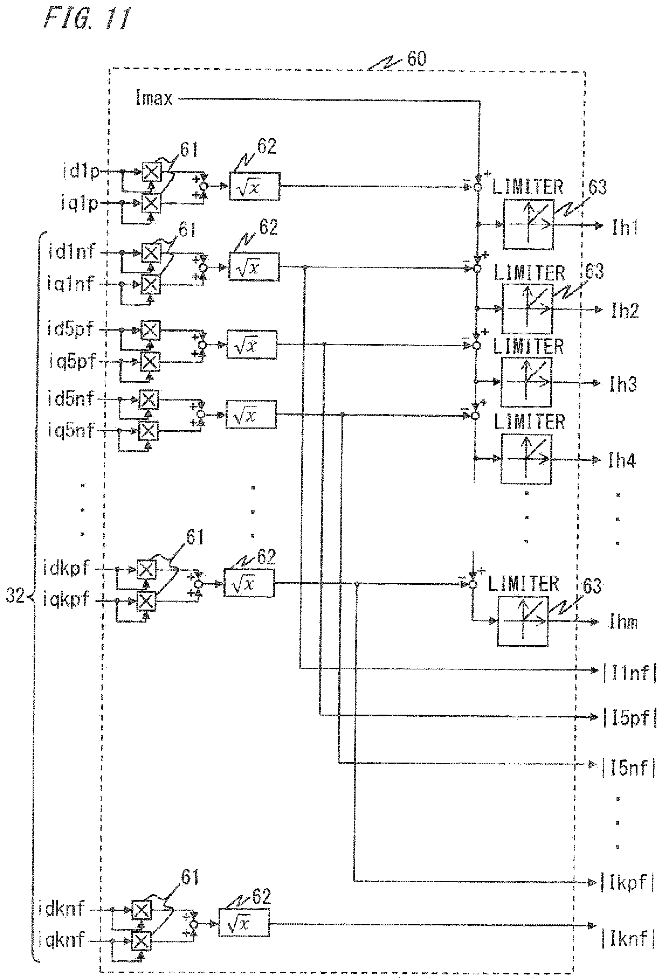

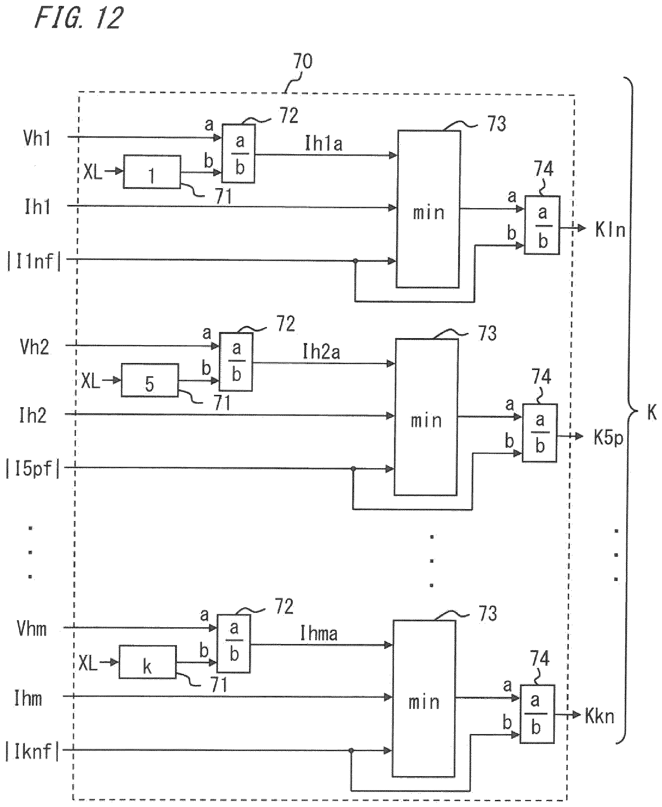

FIG. 10 shows a configuration of the voltage limitation value generation unit 50 in the limit coefficient calculation unit 40, and FIG. 11 shows a configuration of the current limitation value generation unit 60 in the limit coefficient calculation unit 40. FIG. 12 shows a configuration of the coefficient calculating unit 70 in the limit coefficient calculation unit 40.

Regarding harmonics to be compensated for by the harmonic compensation unit 23, a priority of harmonic compensation is set for each of the plurality of frequency components, and in the limit coefficient calculation unit 40, the voltage limitation value generation unit 50 and the current limitation value generation unit 60 generate voltage upper limit values Vh1 to Vhm and current upper limit values Ih1 to Ihm for the respective frequency components, in the order of the priorities.

As shown in FIG. 9 and FIG. 10, in the voltage limitation value generation unit 50, a grid voltage maximum value Vsmax is subtracted from maximum voltage Vmax that the power converter 10 can output, thereby calculating voltage Vhmax that can be used for control of the power converter 10.

The voltage limitation value generation unit 50 receives the active current command id1p and the reactive current command iq1p, and compensation current desired values 32a ((id1nf, iq1nf), (id5pf, iq5pf), (id5nf, iq5nf), ..., (idkpf, iqkpf)) excluding the kth-order negative-phase-sequence component having the lowest priority among the compensation current desired values 32 from the current command generation unit 30.

In the voltage limitation value generation unit 50, the received d-axis and q-axis currents of each frequency component are squared by multipliers 51, and a square root of a sum obtained by adding the squared values is calculated by a square root calculator 52, thereby generating current amplitude values |I1p|, |I1nf|, |I5pf|, |I5nf|, ..., |Ikpf|. Then, at constant multipliers 53, 54, each current amplitude value is multiplied by a constant corresponding to the order number of the current and a fundamental impedance XL of a reactor in the transformer 11, thereby calculating voltage needed for outputting each current amplitude value, i.e., voltage to be allocated for each frequency component.

Further, the voltage limitation value generation unit 50 subtracts the voltage to be allocated for the fundamental positive-phase-sequence component from the voltage Vhmax, and then performs limiter processing for making a negative value be zero by a limiter 55, thereby calculating the voltage upper limit value Vh1 for the frequency component for which harmonic compensation is performed with the priority set at the first rank, in this case, the fundamental negative-phase-sequence component.

Then, from the voltage upper limit value Vh1 before the limiter processing, the voltage to be allocated for the fundamental negative-phase-sequence component is subtracted, and the resultant value is similarly subjected to limiter processing, thus calculating the voltage upper limit value Vh2 for the frequency component of which the priority is at the second rank, in this case, the fifth-order positive-phase-sequence component.

Similarly, for each frequency component that is the compensation target, the voltage to be allocated for the frequency component is calculated, and this voltage is subtracted from the voltage upper limit value before limiter processing, to calculate the voltage upper limit value for the frequency component of which the priority is at the next rank.

Thus, the voltage upper limit values Vh1, Vh2, Vh3, Vh4, ..., Vhm are generated in the order of priorities from the first rank. The generated voltage upper limit values are inputted to the coefficient calculating unit 70.

In a case where the voltage value inputted to the limiter 55 is a negative value, the output voltage of the power converter 10 has already exceeded the usable voltage, and therefore the voltage value is made to be zero by limiter processing and calculation of voltage upper limit values is not performed for the subsequent frequency components.

As shown in FIG. 9 and FIG. 11, the current limitation value generation unit 60 receives the active current command id1p and the reactive current command iq1p, and the compensation current desired values 32 ((id1nf, iq1nf), (id5pf, iq5pf), (id5nf, iq5nf), ..., (idkpf, iqkpf), and (idknf, iqknf)) from the current command generation unit 30.

Regarding the received dq-axis currents of each frequency component, the d-axis and q-axis currents are squared by multipliers 61, and a square root of a sum obtained by adding the squared values is calculated by a square root calculator 62, thereby generating current amplitude values [I1p|, |I1nf|, |I5pf|, |I5nf|, ..., |Ikpf|, and |Iknf|. The current amplitude values are currents to be allocated for the respective frequency components.

Further, the current limitation value generation unit 60 subtracts the current amplitude value |I1p| which is the current to be allocated for the fundamental positive-phase-sequence component from maximum current Imax that the power converter 10 can output, and then performs limiter processing for making a negative value be zero by a limiter 63, thus calculating the current upper limit value Ih1 for the frequency component for which harmonic compensation is performed with the priority set at the first rank, in this case, the fundamental negative-phase-sequence component.

Then, from the current upper limit value Ih1 before the limiter processing, the current amplitude value |I1nf] which is the current to be allocated for the fundamental negative-phase-sequence component is subtracted, and the resultant value is similarly subjected to limiter processing, thus calculating the current upper limit value Ih2 for the frequency component of which the priority is at the second rank, in this case, the fifth-order positive-phase-sequence component.

Similarly, for each frequency component that is the compensation target, the current (current amplitude value) to be allocated for the frequency component is calculated, and this current is subtracted from the current upper limit value before limiter processing, to calculate the current upper limit value for the frequency component of which the priority is at the next rank.

Thus, the current limitation value generation unit 60 generates the current upper limit values Ih1, Ih2, Ih3, Ih4, ..., Ihm for the respective frequency components that are the compensation targets, in the order of priorities from the first rank. Then, the generated current upper limit values Ih1, Ih2, Ih3, Ih4, ..., Ihm and the generated current amplitude values |I1nf|, |I5pf|, |I5nf|, ..., |Ikpf|, and |Iknf| as second current values are outputted from the current limitation value generation unit 60 and inputted to the coefficient calculating unit 70.

In a case where the current value inputted to the limiter 63 is a negative value, the output current of the power converter 10 has already exceeded the usable current, and therefore the current value is made to be zero by limiter processing and calculation of current upper limit values is not performed for the subsequent frequency components. For the kth-order negative-phase-sequence component having the lowest priority, limiter processing is not performed after the current amplitude value |Iknf| is calculated, and only the current amplitude value |Iknf| is outputted.

As shown in FIG. 9 and FIG. 12, the coefficient calculating unit 70 receives the voltage upper limit values Vh1, Vh2, Vh3, Vh4, ..., Vhm, the current upper limit values Ih1, Ih2, Ih3, Ih4, ..., Ihm, and the current amplitude values |I1nf|, |I5pf|, |I5nf|, ..., |Ikpf|, and |Iknf| generated for the respective frequency components that are the compensation targets.

Then, for each frequency component, the limit coefficient is calculated using the voltage upper limit value, the current upper limit value, and the current amplitude value. For example, for the fundamental negative-phase-sequence component of which the priority is at the first rank, the fundamental impedance XL of the reactor in the transformer 11 is multiplied by a constant corresponding to the order number (in this case, 1) at a constant multiplier 71, thereby calculating an impedance corresponding to the order number. Then, the voltage upper limit value Vh1 is divided by the calculated impedance at a divider 72, thereby calculating a first current value Ih1a which is a current limitation value based on the voltage upper limit value Vh1.

The calculated first current value Ih1a, the calculated current upper limit value Ih1, and the calculated current amplitude value |I1nf| are inputted to a minimum value extractor 73, and the minimum value extractor 73 extracts the minimum value among the three current values. This minimum value is divided by the current amplitude value |I1nf] at a divider 74, thereby calculating the limit coefficient K1n which is the ratio of the minimum value to the current amplitude value |I1nf|.

Similarly, also regarding the other frequency components, the minimum values are extracted among the first current values Ih2a, ..., Ihma calculated from the voltage upper limit values Vh2, ..., Vhm and the impedances XL based on the frequencies, the current upper limit values Ih2, ..., Ihm, and the current amplitude values |I5pf|, ..., |Iknf| for the respective frequency components, and the minimum values are divided by the current amplitude values |I5pf|, ..., |Iknf|, thereby calculating the limit coefficients K5p, ..., Kkn.

The compensation current desired values 32 for respective frequency components are multiplied by the limit coefficients K (K1n, K5p, ..., Kkn) generated as described above, that is, the compensation current desired values 32 are corrected using the limit coefficients K, whereby the compensation current commands 31 are generated.

As described above, in the present embodiment, the harmonic compensation unit 23 in the control circuit 20 generates the compensation current desired value 32 for each of the plurality of frequency components on the basis of the load current iload, and calculates each limit coefficient K on the basis of the compensation current desired value 32, and the maximum voltage Vmax and the maximum current Imax that the power converter 10 can output. Then, each compensation current desired value 32 is corrected using the corresponding limit coefficient K, thereby generating the compensation current command 31 for each frequency component.

Thus, while sufficient usage of the voltage and the current that the power converter 10 can output is promoted, the limit coefficient can be calculated individually in accordance with the order number of the compensation current, and thus it is possible to effectively perform harmonic compensation for each harmonic order. In addition, the limit coefficients can be calculated in real time in accordance with the operation condition of the power conversion device 100 and thus it is possible to perform control with high reliability and high accuracy.

In the present embodiment, in the harmonic compensation unit 23, for the frequency component that is the compensation target (e.g., first-order negative-phase-sequence component), the voltage upper limit value Vh1 and the current upper limit value Ih1 are calculated, the minimum value is extracted among the first current value Ih1a based on the voltage upper limit value Vh1, the current upper limit value Ih1, and the current amplitude value |I1nf] of the compensation current desired value 32, and the minimum value is divided by the current amplitude value |I1nf|, thereby calculating the limit coefficient K1n. Thus, it is possible to generate the compensation current command 31 such that the usable voltage and current are not exceeded and can be sufficiently used, for each frequency component that is the compensation target.

In the present embodiment, in the harmonic compensation unit 23, a priority is set for each frequency component that is the compensation target, and the voltage upper limit value (e.g., Vh1) and the current upper limit value (e.g., Ih1) are calculated in a descending order of the priorities. Thus, the voltage and the current that can be used for the power converter 10 can be allocated from a frequency component having a higher priority, whereby harmonic compensation can be effectively performed.

In the present embodiment, the harmonic compensation unit 23 calculates the voltage upper limit value (Vh1) and the current upper limit value (Ih1) for the frequency component of which the priority is at the first rank, on the basis of the maximum voltage Vmax and the maximum current Imax that the power converter 10 can output and the first current command (active current command id1p and reactive current command iq1p) for the fundamental positive-phase-sequence component.

Then, for each frequency component that is the compensation target, the harmonic compensation unit 23 calculates voltage and current to be allocated for the frequency component, and subtracts the calculated voltage and current from the voltage upper limit value (e.g., Vh1) and the current upper limit value (e.g., Ih1), respectively, thereby calculating the voltage upper limit value (Vh2) and the current upper limit value (Ih2) for the frequency component of which the priority is at the next rank (e.g., second rank).

Thus, while the voltage and current that can be used for the power converter 10 are assuredly and accurately allocated from a frequency component having a higher priority, the voltage upper limit values (e.g., Vh1) and the current upper limit values (e.g., Ih1) can be calculated.

In the above embodiment, for the fundamental negative-phase-sequence component, the priority of harmonic compensation is set at the first rank. However, even in a case of another priority rank, the compensation current command 31 can be generated in the same manner and the same effects are obtained.

In the above description, the fundamental impedance XL is the impedance in the transformer 11, but impedances of the reactors L, Lp, Ln in the power converter 10 may be added thereto.

In the above embodiment, the harmonic compensation unit 23 generates the compensation current desired value 32 for each of the plurality of frequency components on the basis of the load current iload and generates the compensation current command 31. However, the compensation current desired value 32 may be generated from another control system. For example, on the basis of the interconnection point voltage Vs, the compensation current desired value 32 may be generated so as to reduce a harmonic component of the interconnection point voltage Vs.

### Embodiment 2

In the above Embodiment 1, the case where priorities of harmonic compensation are different among a plurality of frequency components, has been shown. In Embodiment 2, a case where priorities are set at the same rank among a plurality of frequency components, will be described below. Also in Embodiment 2, a schematic configuration of the power conversion device 100 is the same as that in the above Embodiment 1 shown in FIG. 1, and while a fundamental positive-phase-sequence component is outputted, harmonic compensation is performed for each frequency component.

Hereinafter, the configuration and operation of the harmonic compensation unit 23 according to Embodiment 2 will be described in detail.

As in the above Embodiment 1, the harmonic compensation unit 23 includes a current command generation unit 30A and a limit coefficient calculation unit 40A, and generates the compensation current commands 31 for compensating for harmonic currents by compensation currents. In the present embodiment, a priority of harmonic compensation for the fundamental negative-phase-sequence component is set at the first rank, and priorities for the other components are all set at the same rank.

The current command generation unit 30A receives the value of the load current iload from the current detector 4 and the limit coefficient K generated for each frequency component by the limit coefficient calculation unit 40A. Then, the current command generation unit 30A generates the compensation current desired value 32 for each of the plurality of frequency components on the basis of the load current iload, and corrects the compensation current desired value 32 using the limit coefficient K, to generate the compensation current command 31.

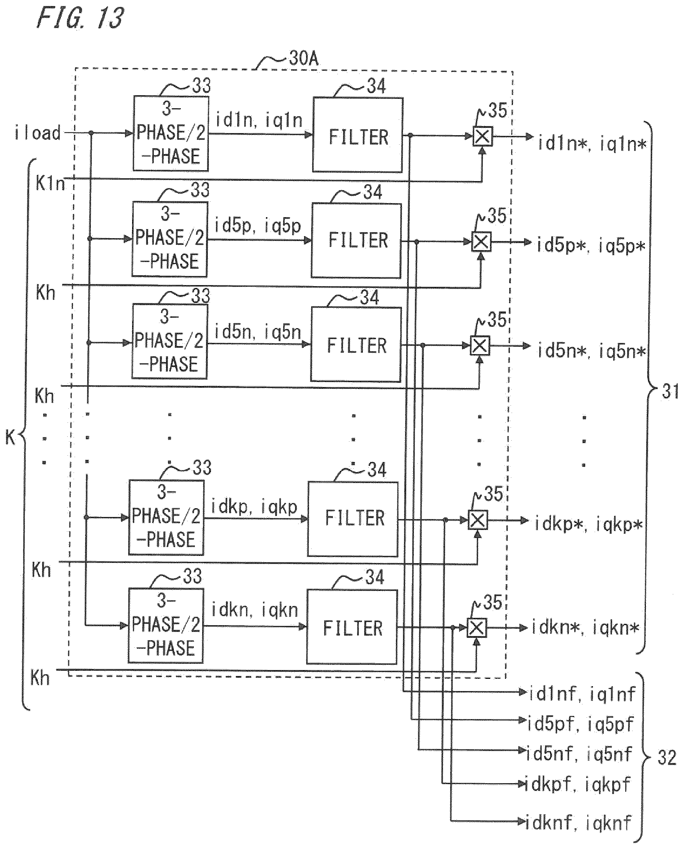

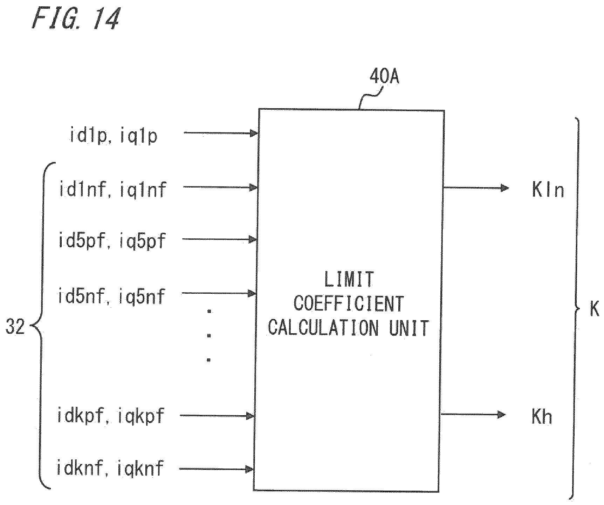

FIG. 13 shows a configuration of the current command generation unit 30A according to Embodiment 2, and FIG. 14 shows a schematic configuration of the limit coefficient calculation unit 40A.

The current command generation unit 30A receives the value of the load current iload and the limit coefficient K (K1n, Kh) generated for each frequency component by the limit coefficient calculation unit 40A. In this case, since a priority of harmonic compensation for the fundamental negative-phase-sequence component is set at the first rank, and priorities for the other components are all set at the same rank, the limit coefficients Kh for the frequency components other than the fundamental negative-phase-sequence component are all equal to each other.

As in the above Embodiment 1, the current command generation unit 30A includes the plurality of coordinate conversion units 33 that perform 3-phase/2-phase rotational coordinate conversion to extract a plurality of frequency components that are harmonic compensation targets, on the basis of the load current iload, and further includes the plurality of filters 34 and the plurality of multipliers 35.

The three-phase load currents iload are subjected to rotational coordinate conversion by each of the plurality of coordinate conversion units 33, to be converted to DC currents for the plurality of frequency components. The plurality of coordinate conversion units 33 are set with different phases for coordinate conversion. For example, in a case of performing conversion to the dq-axis currents id1n, iq1n of the fundamental negative-phase-sequence component, coordinate conversion is performed with a negative fundamental component phase, and in a case of performing conversion to the dq-axis currents id5p, iq5p of the fifth-order positive-phase-sequence component, coordinate conversion is performed with a positive fifth-order component phase. In this case, the fundamental negative-phase-sequence component, the fifth-order positive-phase-sequence component, the fifth-order negative-phase-sequence component, ..., the kth-order positive-phase-sequence component, and the kth-order negative-phase-sequence component are compensation targets, and dq-axis currents (id1n, iq1n), (id5p, iq5p), (id5n, iq5n), ..., (idkp, iqkp), (idkn, iqkn) are generated.

The dq-axis currents generated for each frequency component pass the filter 34 by which harmonic components are removed from DC current so that only the frequency component that is the compensation target is extracted. Thus, for the respective frequency components, the compensation current desired values 32, i.e., (id1nf, iq1nf), (id5pf, iq5pf), (id5nf, iq5nf), ..., (idkpf, iqkpf), (idknf, iqknf) are generated.

Then, at the multiplier 35, the compensation current desired value 32 for each frequency component is multiplied by the limit coefficient K (K1n, Kh) generated for each frequency component by the limit coefficient calculation unit 40A. Thus, for the respective frequency components, the compensation current commands 31, i.e., (id1n*, iq1n*), (id5p*, iq5p*), (id5n*, iq5n*), ..., (idkp*, iqkp*), and (idkn*, iqkn*) are generated. In this case, the limit coefficients K (K1n, Kh) generated for the respective frequency components are the same except for the fundamental negative-phase-sequence component, and therefore two kinds of limit coefficients are used.

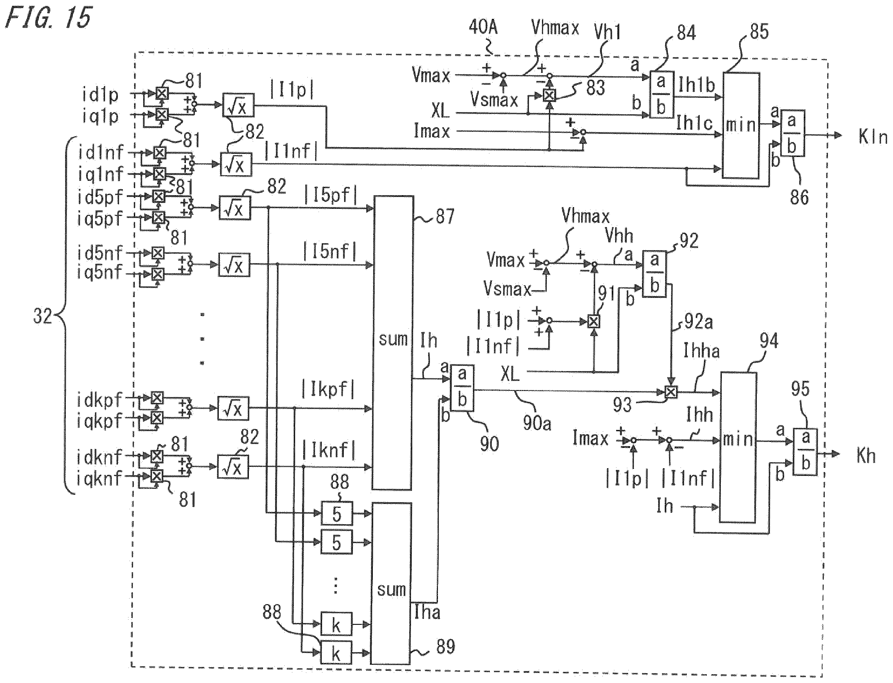

FIG. 15 shows a detailed configuration of the limit coefficient calculation unit 40A.

As shown in FIG. 15, the limit coefficient calculation unit 40A receives the active current command id1p and the reactive current command iq1p, and the compensation current desired values 32 ((id1nf, iq1nf), (id5pf, iq5pf), (id5nf, iq5nf), ..., (idkpf, iqkpf), and (idknf, iqknf)) from the current command generation unit 30A.

In the limit coefficient calculation unit 40A, the received d-axis and q-axis currents of each frequency component are squared by multipliers 81, and a square root of a sum obtained by adding the squared values is calculated by a square root calculator 82, thereby generating current amplitude values |I1p|, |I1nf|, |I5pf|, |I5nf|, ..., |Ikpf|, and |Iknf|.

In addition, the limit coefficient calculation unit 40A subtracts the grid voltage maximum value Vsmax from the maximum voltage Vmax that the power converter 10 can output, thereby calculating the voltage Vhmax that can be used for control of the power converter 10. In addition, at a constant multiplier 83, the current amplitude value |I1p| of the fundamental positive-phase-sequence component is multiplied by the fundamental impedance XL of the reactor in the transformer 11, thereby calculating voltage needed for outputting the current amplitude value |I1p|, i.e., voltage to be allocated for the fundamental positive-phase-sequence component.

Then, the limit coefficient calculation unit 40A subtracts the voltage to be allocated for the fundamental positive-phase-sequence component from the voltage Vhmax, thereby calculating the voltage upper limit value Vh1 for the frequency component for which harmonic compensation is performed with the priority set at the first rank, in this case, the fundamental negative-phase-sequence component.

Then, the voltage upper limit value Vh1 is divided by the fundamental impedance XL at a divider 84, thereby calculating a first current value Ih1b which is a current limitation value based on the voltage upper limit value Vh1.

In addition, the limit coefficient calculation unit 40A subtracts the current amplitude value |I1p| which is current to be allocated for the fundamental positive-phase-sequence component from the maximum current Imax that the power converter 10 can output, thereby calculating a current upper limit value Ih1c for the fundamental negative-phase-sequence component.

The calculated first current value Ihlb, the calculated current upper limit value Ih1c, and the calculated current amplitude value |I1nf] of the fundamental negative-phase-sequence component as the second current value are inputted to a minimum value extractor 85, and the minimum value extractor 85 extracts the minimum value among the three current values. This minimum value is divided by the current amplitude value |I1nf| at a divider 86, thereby calculating the limit coefficient K1n which is the ratio of the minimum value to the current amplitude value |I1nf|.

The limit coefficient Kh for the frequency component group of which the priorities are at the second rank or below is calculated as follows.

In the limit coefficient calculation unit 40A, the sum of the current amplitude values |I1p| and |I1nf| of the fundamental positive-phase-sequence component and the fundamental negative-phase-sequence component is multiplied by the fundamental impedance XL of the reactor in the transformer 11, at a constant multiplier 91, thereby calculating voltage needed for outputting the current amplitude value |I1p| and the current amplitude value |I1nf], i.e., voltage to be allocated for the fundamental positive-phase-sequence component and the fundamental negative-phase-sequence component.

Then, the limit coefficient calculation unit 40A subtracts the voltage to be allocated for the fundamental positive-phase-sequence component and the fundamental negative-phase-sequence component from the voltage Vhmax, thereby calculating a voltage upper limit value Vhh for the frequency component group of which the priorities are at the second rank or below. Then, the voltage upper limit value Vhh is divided by the fundamental impedance XL at a divider 92, thereby calculating a current limitation value 92a based on the voltage upper limit value Vhh.

In addition, regarding the current amplitude values |I5pf|, |I5nf|, ..., |Ikpf|, and |Iknf| other than the fundamental positive-phase-sequence component and the fundamental negative-phase-sequence component, an amplitude sum Ih which is the total sum of these amplitude values is calculated as the second current value, by a total sum calculator 87. Further, the current amplitude values |I5pf|, |I5nf|, ..., |Ikpf|, and |Iknf| are multiplied by constants corresponding to the respective order numbers at constant multipliers 88, and the total sum thereof is calculated as a third current value Iha by a total sum calculator 89. The third current value Iha is the total sum of the current amplitude values imparted with weights based on the respective frequencies.

Then, a value 90a obtained by dividing the amplitude sum Ih (second current value) by the third current value Iha at a divider 90 is multiplied by the current limitation value 92a based on the voltage upper limit value Vhh at a multiplier 93, thereby calculating a first current value Ihha which is a current limitation value based on the voltage upper limit value Vhh for the frequency component group of which the priorities are at the second rank or below.

In addition, in the limit coefficient calculation unit 40A, the current amplitude values |I1p| and |I1nf| which are currents to be respectively allocated for the fundamental positive-phase-sequence component and the fundamental negative-phase-sequence component are sequentially subtracted from the maximum current Imax that the power converter 10 can output, thereby calculating a current upper limit value Ihh for the frequency component group of which the priorities are at the second rank or below.

The calculated first current value Ihha, the calculated current upper limit value Ihh, and the calculated amplitude sum Ih (second current value) are inputted to a minimum value extractor 94, and the minimum value extractor 94 extracts the minimum value among the three current values. This minimum value is divided by the amplitude sum Ih at a divider 95, thereby calculating the limit coefficient Kh which is the ratio of the minimum value to the amplitude sum Ih.

The compensation current desired values 32 for the respective frequency components are multiplied by the limit coefficients K (K1n, Kh) generated as described above, that is, the compensation current desired values 32 are corrected using the limit coefficients K, whereby the compensation current commands 31 are generated.

Also in the present embodiment, as in the above Embodiment 1, while sufficient usage of the voltage and the current that the power converter 10 can output is promoted, the limit coefficient can be calculated in accordance with each order number of the compensation current, and thus it is possible to effectively perform harmonic compensation for each harmonic order. In addition, the limit coefficients K can be calculated in real time in accordance with the operation condition of the power conversion device 100 and thus it is possible to perform control with high reliability and high accuracy.

In addition, in the present embodiment, for the plurality of frequency components of which the priorities are at the second rank or below, the compensation current commands 31 can be generated using the same limit coefficient K without particularly setting different priorities.

Further, for example, in a case of desiring to preferentially compensate for a specific frequency component because of resonance of a transmission line or the like, the priority for that frequency component may be set at the first rank, and priorities for the other frequency components may be set at the same rank, whereby it is possible to effectively perform harmonic compensation so as to specialize in the specific frequency component.

In the above embodiment, priorities of harmonic compensation for the frequency components at the second rank or below are all set at the same rank. However, by combining the method of the above Embodiment 1, the same ranks of priorities may be set for a plurality of frequency component groups and thus a total of three or more different limit coefficients K may be generated to generate the compensation current commands 31, whereby control with a high degree of freedom can be realized.

### Embodiment 3

In the above embodiments 1 and 2, also for the frequency component of which the priority of harmonic compensation is at the first rank, the voltage upper limit value Vh1 and the current upper limit values Ih1, Ih1c are calculated and the limit coefficient K1n is calculated. However, the present invention is not limited thereto.

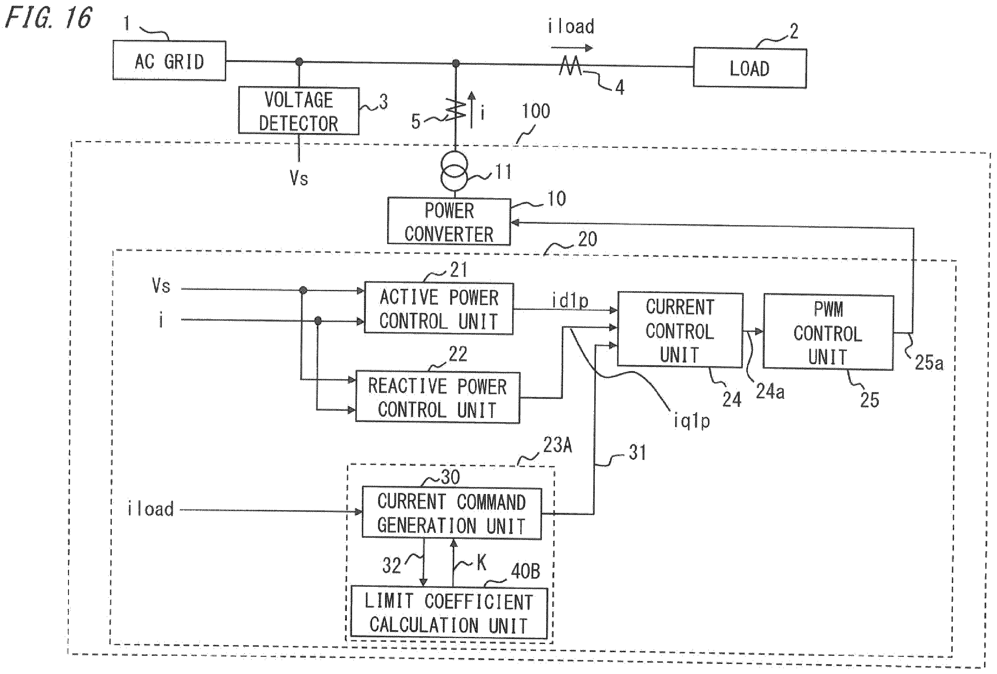

FIG. 16 is a block diagram showing a schematic configuration of a power conversion device according to Embodiment 3.

As in the above Embodiment 1, the power conversion device 100 includes the power converter 10 and the control circuit 20, and the control circuit 20 performs switching control of switching elements in the power converter 10 on the basis of input information (interconnection point voltage Vs, load current iload, output current i) from the voltage detector 3 and the current detectors 4, 5, thereby performing output control of the power converter 10.

The control circuit 20 includes the active power control unit 21, the reactive power control unit 22, a harmonic compensation unit 23A, the current control unit 24, and the PWM control unit 25. The harmonic compensation unit 23A includes the current command generation unit 30 and a limit coefficient calculation unit 40B, and generates the compensation current commands 31 for compensating for harmonic currents by compensation currents.

In Embodiment 3, the active current command id1p and the reactive current command iq1p from the active power control unit 21 and the reactive power control unit 22 are inputted only to the current control unit 24. The limit coefficient calculation unit 40B receives the compensation current desired values 32 from the current command generation unit 30, and generates the limit coefficient K for each frequency component on the basis of the compensation current desired values 32. The other configurations are the same as those in the above Embodiment 1 shown in FIG. 1.

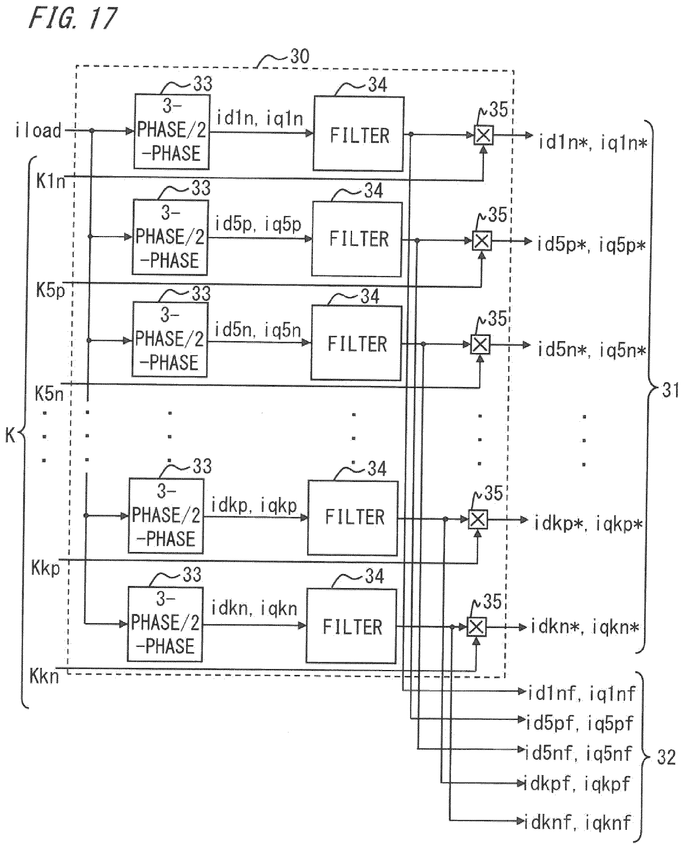

FIG. 17 shows a configuration of the current command generation unit 30 of the harmonic compensation unit 23A. The current command generation unit 30 is the same as that in the above Embodiment 1 shown in FIG. 8, and operates in the same manner to generate the compensation current desired value 32 and generate the compensation current command 31, for each frequency component.

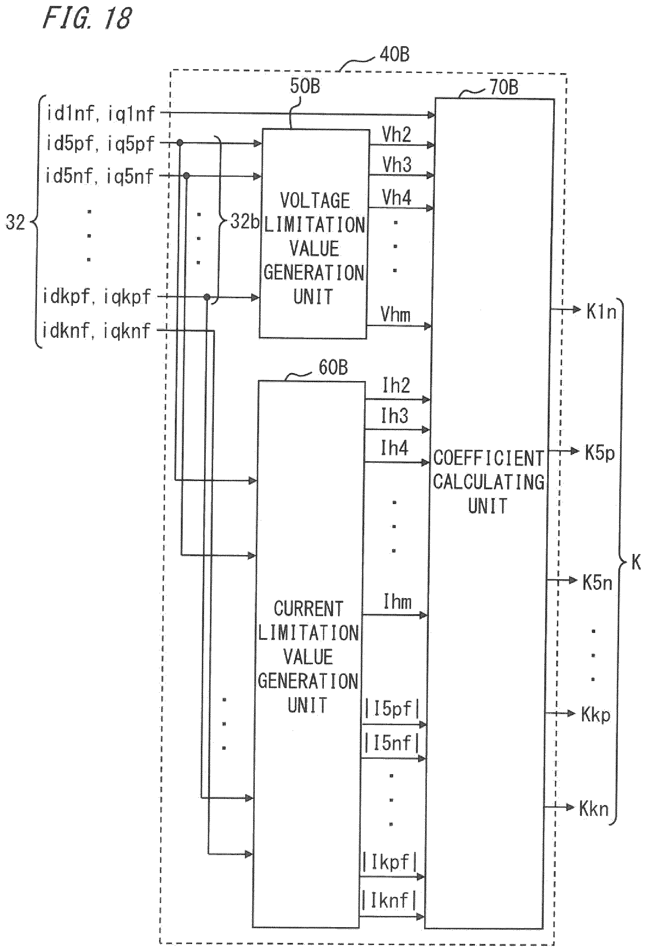

FIG. 18 shows a configuration of the limit coefficient calculation unit 40B of the harmonic compensation unit 23A.

The limit coefficient calculation unit 40B includes a voltage limitation value generation unit 50B, a current limitation value generation unit 60B, and a coefficient calculating unit 70B. The limit coefficient calculation unit 40B receives the compensation current desired values 32 from the current command generation unit 30, and generates the limit coefficient K (K1n, K5p, K5n, ..., Kkp, and Kkn) for each frequency component.

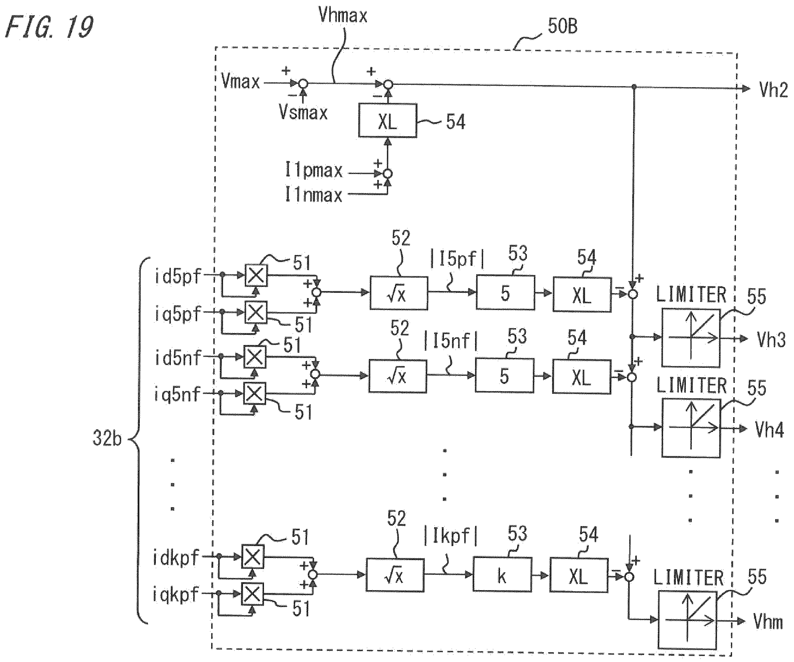

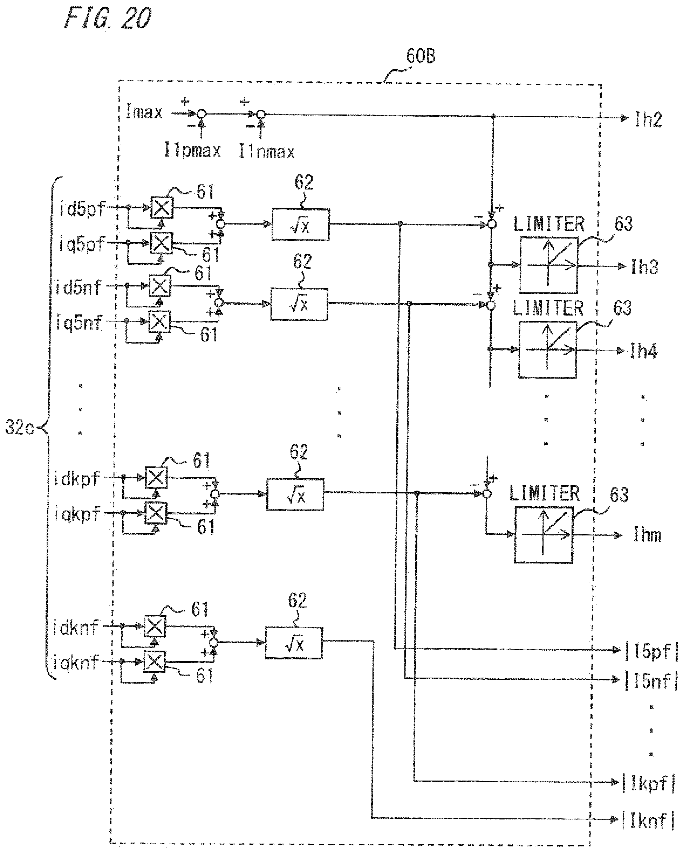

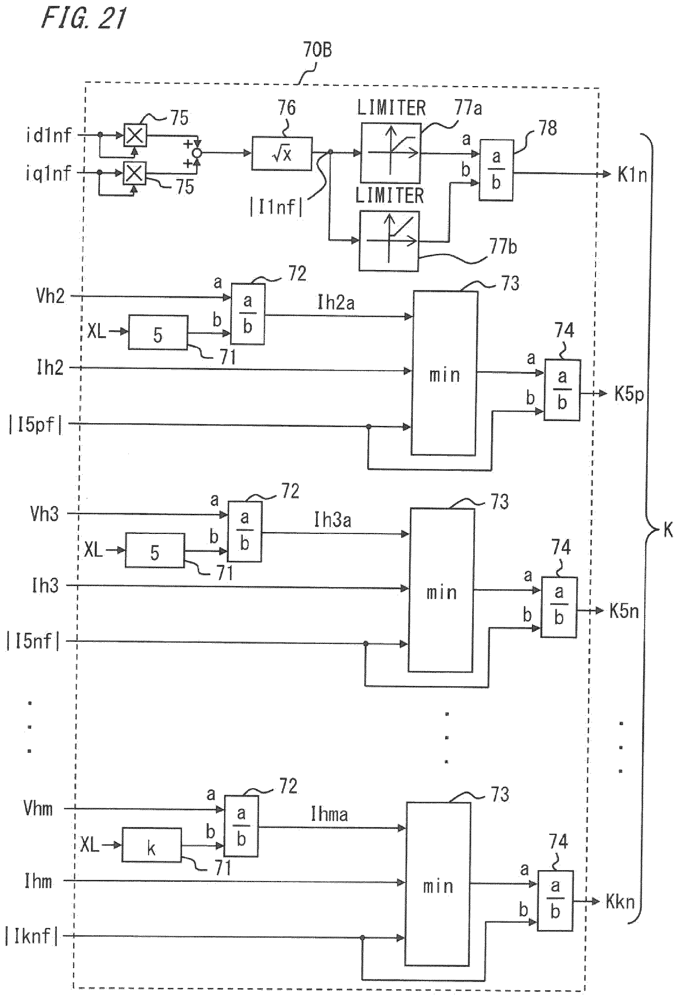

FIG. 19 shows a configuration of the voltage limitation value generation unit 50B in the limit coefficient calculation unit 40B, and FIG. 20 shows a configuration of the current limitation value generation unit 60B in the limit coefficient calculation unit 40B. FIG. 21 shows a configuration of the coefficient calculating unit 70B in the limit coefficient calculation unit 40.

Regarding harmonics to be compensated for by the harmonic compensation unit 23A, a priority of harmonic compensation is set for each of the plurality of frequency components, and in this case, the priority for the fundamental negative-phase-sequence component is set at the first rank. In the limit coefficient calculation unit 40B, the voltage limitation value generation unit 50B and the current limitation value generation unit 60B generate the voltage upper limit values Vh2 to Vhm and the current upper limit values Ih2 to Ihm for the respective frequency components, in a descending order of priorities from the second rank.

As shown in FIG. 18 and FIG. 19, the voltage limitation value generation unit 50B receives compensation current desired values 32b ((id5pf, iq5pf), (id5nf, iq5nf), ..., (idkpf, iqkpf)) excluding the fundamental negative-phase-sequence component of which the priority is at the first rank and the kth-order negative-phase-sequence component having the lowest priority among the compensation current desired values 32 from the current command generation unit 30.

In the voltage limitation value generation unit 50B, the received d-axis and q-axis currents of each frequency component are squared by the multipliers 51, and a square root of a sum obtained by adding the squared values is calculated by the square root calculator 52, thereby generating the current amplitude values |I5pf|, |I5nf|, ..., |Ikpf|. Then, at the constant multipliers 53, 54, each current amplitude value is multiplied by a constant corresponding to the order number of the current and the fundamental impedance XL of the reactor in the transformer 11, thereby calculating voltage needed for outputting each current amplitude value, i.e., voltage to be allocated for each frequency component.

In addition, in the voltage limitation value generation unit 50B, the grid voltage maximum value Vsmax is subtracted from the maximum voltage Vmax that the power converter 10 can output, thereby calculating the voltage Vhmax that can be used for control of the power converter 10. Then, the sum of a current maximum value I1pmax of the fundamental positive-phase-sequence component and a current maximum value I1nmax of the fundamental negative-phase-sequence component is multiplied by the fundamental impedance XL of the reactor in the transformer 11, at the constant multiplier 54, thereby calculating voltage for the fundamental positive-phase-sequence component and the fundamental negative-phase-sequence component. The calculated voltage is subtracted from the voltage Vhmax, thereby calculating the voltage upper limit value Vh2 for the frequency component for which harmonic compensation is performed with the priority set at the second rank, in this case, the fifth-order positive-phase-sequence component.

Further, the voltage limitation value generation unit 50B subtracts the voltage to be allocated for the fifth-order positive-phase-sequence component from the voltage upper limit value Vh2 for the fifth-order positive-phase-sequence component, and then performs limiter processing for making a negative value be zero by the limiter 55, thereby calculating the voltage upper limit value Vh3 for the frequency component for which harmonic compensation is performed with the priority set at the third rank, in this case, the fifth-order negative-phase-sequence component. Similarly, for each frequency component that is the compensation target, voltage to be allocated for the frequency component is calculated, and this voltage is subtracted from the voltage upper limit value before limiter processing, to calculate the voltage upper limit value for the frequency component of which the priority is at the next rank.

Thus, the voltage upper limit values Vh2, Vh3, Vh4, ..., Vhm are generated in the order of priorities from the second rank. The generated voltage upper limit values are inputted to the coefficient calculating unit 70B.

In a case where the voltage value inputted to the limiter 55 is a negative value, the output voltage of the power converter 10 has already exceeded the usable voltage, and therefore the voltage value is made to be zero by limiter processing and calculation of voltage upper limit values is not performed for the subsequent frequency components.

As shown in FIG. 18 and FIG. 20, the current limitation value generation unit 60B receives compensation current desired values 32c ((id5pf, iq5pf), (id5nf, iq5nf), ..., (idkpf, iqkpf), and (idknf, iqknf)) excluding the fundamental negative-phase-sequence component of which the priority is at the first rank among the compensation current desired values 32 from the current command generation unit 30.

In the current limitation value generation unit 60B, the received d-axis and q-axis currents of each frequency component are squared by the multipliers 61, and a square root of a sum obtained by adding the squared values is calculated by the square root calculator 62, thereby generating the current amplitude values |I5pf|, |I5nf|, ..., |Ikpf], and |Iknf|. The current amplitude values are currents to be allocated for the respective frequency components, in this case, the frequency components of which the priorities are at the second rank or below.

Further, the current limitation value generation unit 60B subtracts the current maximum value I1pmax of the fundamental positive-phase-sequence component and the current maximum value I1nmax of the fundamental negative-phase-sequence component from the maximum current Imax that the power converter 10 can output, thereby calculating the current upper limit value Ih2 for the frequency component for which harmonic compensation is performed with the priority set at the second rank, in this case, the fifth-order positive-phase-sequence component.

Then, from the current upper limit value Ih2, the current amplitude value |I5pf| which is the current to be allocated for the fifth-order positive-phase-sequence component is subtracted, and the resultant value is subjected to limiter processing for making a negative value be zero by the limiter 55, thereby calculating the current upper limit value Ih3 for the frequency component of which the priority is at the third rank, in this case, the fifth-order negative-phase-sequence component.

Similarly, for each frequency component that is the compensation target, the current (current amplitude value) to be allocated for the frequency component is calculated, and this current is subtracted from the current upper limit value before limiter processing, to calculate the current upper limit value for the frequency component of which the priority is at the next rank.

Thus, for the respective frequency components that are the compensation targets, the current limitation value generation unit 60B generates the current upper limit values Ih2, Ih3, Ih4, ..., Ihm in the order of priorities from the second rank. Then, the generated current upper limit values Ih2, Ih3, Ih4, ..., Ihm and the current amplitude values |I5pf|, |I5nf|, ..., |Ikpf|, |Iknf| as second current values are outputted from the current limitation value generation unit 60B and inputted to the coefficient calculating unit 70B.

In a case where the current value inputted to the limiter 63 is a negative value, the output current of the power converter 10 has already exceeded the usable current, and therefore the current value is made to be zero by limiter processing and calculation of current upper limit values is not performed for the subsequent frequency components. For the kth-order negative-phase-sequence component having the lowest priority, limiter processing is not performed after the current amplitude value |Iknf| is calculated, and only the current amplitude value |Iknf| is outputted.

As shown in FIG. 18 and FIG. 21, the coefficient calculating unit 70B receives the fundamental negative-phase-sequence component (id1nf, iq1nf) of which the priority is at the first rank among the compensation current desired values 32 from the current command generation unit 30, and further receives the voltage upper limit values Vh2, Vh3, Vh4, ..., Vhm, the current upper limit values Ih2, Ih3, Ih4, ..., Ihm, and the current amplitude values |I5pf|, |I5nf|, ..., |Ikpf|, and |Iknf| generated for the respective frequency components of which the priorities are at the second rank or below.

In the coefficient calculating unit 70B, the d-axis and q-axis currents for the fundamental negative-phase-sequence component (id1nf, iq1nf) of which the priority is at the first rank are squared by multipliers 75, and a square root of a sum obtained by adding the squared values is calculated by a square root calculator 76, thereby calculating the current amplitude value |I1nf|.

Then, the current amplitude value |I1nf| is subjected to limiter processing with a predetermined limitation value, e.g., I1nmax, by a limiter 77a, and also subjected to limiter processing for avoiding zero by a limiter 77b, and the output of the limiter 77a is divided by the output of the limiter 77b, at a divider 78. Thus, the limit coefficient K1n for the fundamental negative-phase-sequence component is generated.

In addition, for each frequency component of which the priorities are at the second rank or below, the coefficient calculating unit 70B calculates the limit coefficient using the voltage upper limit value, the current upper limit value, and the current amplitude value, as in the above Embodiment 1. For example, for the fifth-order positive-phase-sequence component, the fundamental impedance XL of the reactor in the transformer 11 is multiplied by a constant corresponding to the order number (in this case, 5) at the constant multiplier 71, thereby calculating an impedance corresponding to the order number. Then, the voltage upper limit value Vh2 is divided by the calculated impedance at the divider 72, thereby calculating the first current value Ih2a which is the current limitation value based on the voltage upper limit value Vh2.

The calculated first current value Ih2a, the calculated current upper limit value Ih2, and the calculated current amplitude value |I5pf| are inputted to the minimum value extractor 73, and the minimum value extractor 73 extracts the minimum value among the three current values. This minimum value is divided by the current amplitude value |I5pf| at the divider 74, thereby calculating the limit coefficient K5p which is the ratio of the minimum value to the current amplitude value |I5pf|.

Similarly, also regarding the other frequency components of which the priorities are at the second rank or below, the minimum values are extracted among the first current values Ih3a, ..., Ihma calculated from the voltage upper limit values Vh3, ..., Vhm and the impedances XL based on the frequencies, the current upper limit values Ih3, ..., Ihm, and the current amplitude values |I5nf|, ..., |Iknf| for the respective frequency components, and the minimum values are divided by the current amplitude values |I5nf|, ..., |Iknf|, thereby calculating the limit coefficients K5n, ..., Kkn.

The compensation current desired values 32 for the respective frequency components are multiplied by the limit coefficients K (K1n, K5p, ..., Kkn) generated as described above, that is, the compensation current desired values 32 are corrected using the limit coefficients K, whereby the compensation current commands 31 are generated.

Also in the present embodiment, as in the above Embodiment 1, while sufficient usage of the voltage and the current that the power converter 10 can output is promoted, the limit coefficient can be calculated in accordance with each order number of the compensation current, and thus it is possible to effectively perform harmonic compensation for each harmonic order. In addition, the limit coefficient K can be calculated in real time in accordance with the operation condition of the power conversion device 100 and thus it is possible to perform control with high reliability and high accuracy.

In a case of desiring to preferentially compensate for a specific frequency component, the limit coefficient (K1n) for individually compensating for that frequency component may be generated, and priorities may be set for the other frequency components, to generate the limit coefficients K5p, ..., Kkn using the voltage upper limit values and the current upper limit values as in the above Embodiment 1. Thus, it is possible to perform harmonic compensation so as to specialize in the specific frequency component, and also for the other frequency components, it is possible to accurately perform harmonic control in accordance with priorities.

### Embodiment 4

In the above Embodiment 3, different limit coefficients K are calculated for the frequency components of which the priorities are at the second rank or below. However, as in the above Embodiment 2, for the frequency components of which the priorities are at the second rank or below, the priorities may be set at the same rank and thus an equal limit coefficient K may be calculated.

As in Embodiment 3 shown in FIG. 16, the power conversion device 100 includes the power converter 10 and the control circuit 20, and the control circuit 20 performs switching control of switching elements in the power converter 10 on the basis of input information (interconnection point voltage Vs, load current iload, output current i) from the voltage detector 3 and the current detectors 4, 5, thereby performing output control of the power converter 10.

The control circuit 20 includes the active power control unit 21, the reactive power control unit 22, the harmonic compensation unit 23A, the current control unit 24, and the PWM control unit 25. The harmonic compensation unit 23A includes the current command generation unit 30A and a limit coefficient calculation unit 40C, and generates the compensation current commands 31 for compensating for harmonic currents by compensation currents.

In Embodiment 4, as in the above Embodiment 3, the active current command id1p and the reactive current command iq1p from the active power control unit 21 and the reactive power control unit 22 are inputted only to the current control unit 24. The limit coefficient calculation unit 40C receives the compensation current desired values 32 from the current command generation unit 30A, and generates the limit coefficient K for each frequency component on the basis of the compensation current desired values 32. The other configurations are the same as those in the above Embodiment 1.

As in the above Embodiment 1, the harmonic compensation unit 23A includes the current command generation unit 30A and the limit coefficient calculation unit 40C, and generates the compensation current commands 31 for compensating for harmonic currents by compensation currents. In Embodiment 4, a priority of harmonic compensation for the fundamental negative-phase-sequence component is set at the first rank, and priorities for the other components are all set at the same rank.

The current command generation unit 30A receives the value of the load current iload from the current detector 4 and the limit coefficient K generated for each frequency component by the limit coefficient calculation unit 40C. Then, the current command generation unit 30A generates the compensation current desired value 32 for each of the plurality of frequency components on the basis of the load current iload, and corrects the compensation current desired value 32 using the limit coefficient K, to generate the compensation current command 31.

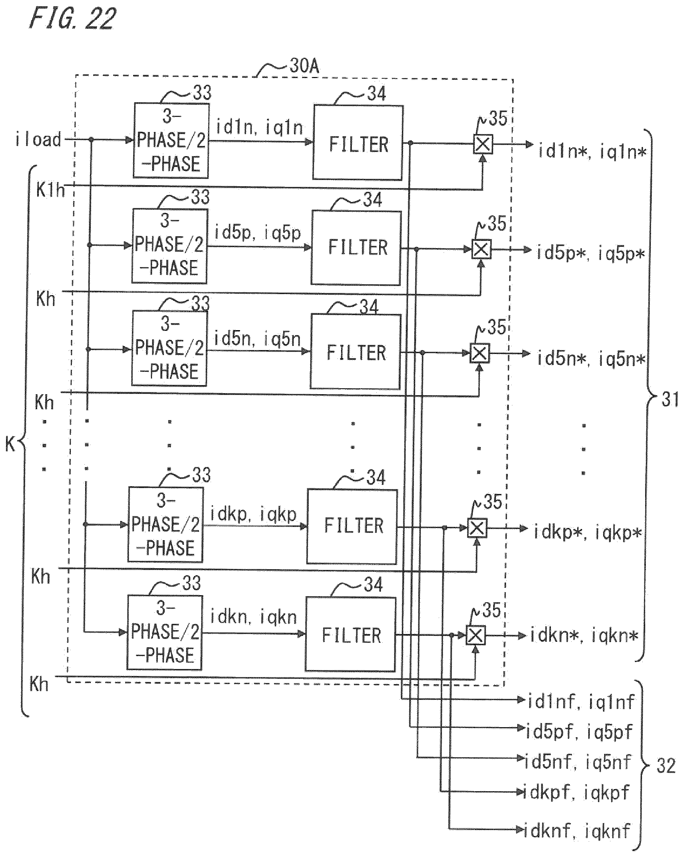

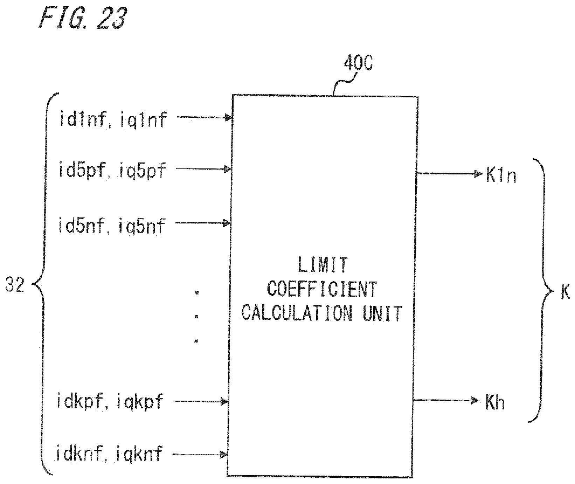

FIG. 22 shows a configuration of the current command generation unit 30A of the harmonic compensation unit 23A, and FIG. 23 shows a configuration of the limit coefficient calculation unit 40C of the harmonic compensation unit 23A.

The current command generation unit 30A is the same as that in the above Embodiment 2 shown in FIG. 13, and operates in the same manner to generate the compensation current desired value 32 and generate the compensation current command 31, for each frequency component. Then, at the multiplier 35, the compensation current desired value 32 for each frequency component is multiplied by the limit coefficient K (K1n, Kh) generated for each frequency component by the limit coefficient calculation unit 40C.

Thus, for the respective frequency components, the compensation current commands 31, i.e., (id1n*, iq1n*), (id5p*, iq5p*), (id5n*, iq5n*), ..., (idkp*, iqkp*), and (idkn*, iqkn*) are generated. In this case, the limit coefficients K (K1n, Kh) generated for the respective frequency components are the same except for the fundamental negative-phase-sequence component, and therefore two kinds of limit coefficients are used.

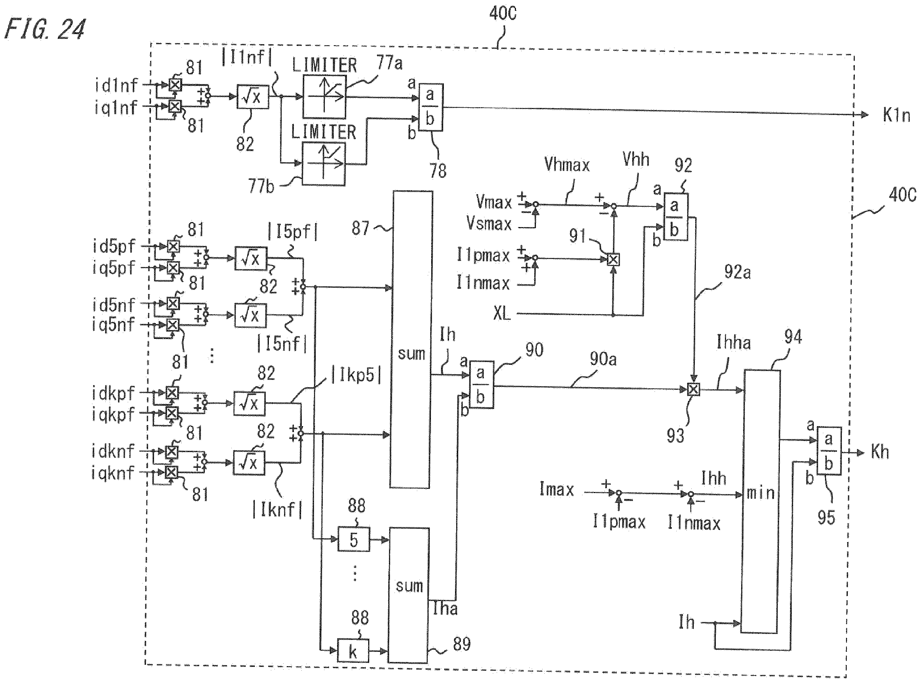

FIG. 24 shows a detailed configuration of the limit coefficient calculation unit 40C.

As shown in FIG. 24, the limit coefficient calculation unit 40C receives the compensation current desired values 32 ((id1nf, iq1nf), (id5pf, iq5pf), (id5nf, iq5nf), ..., (idkpf, iqkpf), and (idknf, iqknf)) from the current command generation unit 30A.

In the limit coefficient calculation unit 40C, the received d-axis and q-axis currents of each frequency component are squared by the multipliers 81, and a square root of a sum obtained by adding the squared values is calculated by the square root calculator 82, thereby generating the current amplitude values |I1nf|, |I5pf|, |I5nf|, ..., |Ikpf|, and |Iknf|.

In addition, the limit coefficient calculation unit 40C generates the limit coefficient K1n for the fundamental negative-phase-sequence component, in the same manner as in the above Embodiment 3. That is, the current amplitude value |I1nf| is subjected to limiter processing with a predetermined limitation value, e.g., I1nmax, by the limiter 77a, and also subjected to limiter processing for avoiding zero by the limiter 77b, and the output of the limiter 77a is divided by the output of the limiter 77b, at the divider 78. Thus, the limit coefficient K1n for the fundamental negative-phase-sequence component is generated.

The limit coefficient Kh for the frequency component group of which the priorities are at the second rank or below is calculated as follows.

The limit coefficient calculation unit 40C subtracts the grid voltage maximum value Vsmax from the maximum voltage Vmax that the power converter 10 can output, thereby calculating voltage Vhmax that can be used for control of the power converter 10. Then, the sum of the current maximum value I1pmax of the fundamental positive-phase-sequence component and the current maximum value I1nmax of the fundamental negative-phase-sequence component is multiplied by the fundamental impedance XL of the reactor in the transformer 11, at the constant multiplier 91, thereby calculating voltage for the fundamental positive-phase-sequence component and the fundamental negative-phase-sequence component.

The calculated voltage is subtracted from the voltage Vhmax, thereby calculating the voltage upper limit value Vhh for the frequency component group of which the priorities are at the second rank or below. Then, the voltage upper limit value Vhh is divided by the fundamental impedance XL at the divider 92, thereby calculating the current limitation value 92a based on the voltage upper limit value Vhh.

In addition, regarding the current amplitude values |I5pf|, |I5nf|, ..., |Ikpf|, and |Iknf| other than the fundamental positive-phase-sequence component and the fundamental negative-phase-sequence component, the amplitude sum Ih which is the total sum of these amplitude values is calculated as the second current value at the total sum calculator 87. Further, the current amplitude values |I5pf|, |I5nf|, ..., |Ikpf|, |Iknf| are multiplied by constants corresponding to the respective order numbers at the constant multipliers 88, and the total sum thereof is calculated as the third current value Iha at the total sum calculator 89. The third current value Iha is the total sum of the current amplitude values imparted with weights based on the respective frequencies.

It is noted that, regarding frequency components for each order, a positive-phase-sequence component and a negative-phase-sequence component are present, and therefore the case where the sum of the positive-phase-sequence component and the negative-phase-sequence component for the same order is calculated and then the total sum thereof is calculated, has been shown.

Then, the value 90a obtained by dividing the amplitude sum Ih (second current value) by the third current value Iha at the divider 90 is multiplied by the current limitation value 92a based on the voltage upper limit value Vhh at the multiplier 93, thereby calculating the first current value Ihha which is the current limitation value based on the voltage upper limit value Vhh for the frequency component group of which the priorities are at the second rank or below.

In addition, in the limit coefficient calculation unit 40C, the current maximum value I1pmax of the fundamental positive-phase-sequence component and the current maximum value I1nmax of the fundamental negative-phase-sequence component are sequentially subtracted from the maximum current Imax that the power converter 10 can output, thereby calculating the current upper limit value Ihh for the frequency component group of which the priorities are at the second rank or below.

The calculated first current value Ihha, the calculated current upper limit value Ihh, and the calculated amplitude sum Ih (second current value) are inputted to the minimum value extractor 94, and the minimum value extractor 94 extracts the minimum value among the three current values. This minimum value is divided by the amplitude sum Ih at the divider 95, thereby calculating the limit coefficient Kh which is the ratio of the minimum value to the amplitude sum Ih.

The compensation current desired values 32 for the respective frequency components are multiplied by the limit coefficients K (K1n, Kh) generated as described above, that is, the compensation current desired values 32 are corrected using the limit coefficients K, whereby the compensation current commands 31 are generated.

Also in the present embodiment, as in the above Embodiment 1, while sufficient usage of the voltage and the current that the power converter 10 can output is promoted, the limit coefficient can be calculated in accordance with each order number of the compensation current, and thus it is possible to effectively perform harmonic compensation for each harmonic order. In addition, the limit coefficients K can be calculated in real time in accordance with the operation condition of the power conversion device 100 and thus it is possible to perform control with high reliability and high accuracy.

In addition, in the present embodiment, for the plurality of frequency components of which the priorities are at the second rank or below, the compensation current commands 31 can be generated using the same limit coefficient K without particularly setting different priorities.

In addition, since the limit coefficient (K1n) for preferentially compensating for a specific frequency component individually is generated, it is possible to perform harmonic compensation so as to specialize in the specific frequency component.

### Embodiment 5

The above embodiments have shown the power conversion device in which the active current command id1p and the reactive current command iq1p as the first current command for the fundamental positive-phase-sequence component are generated separately from the compensation current commands 31. However, the harmonic compensation unit may generate a current command including the first current command for the fundamental positive-phase-sequence component.

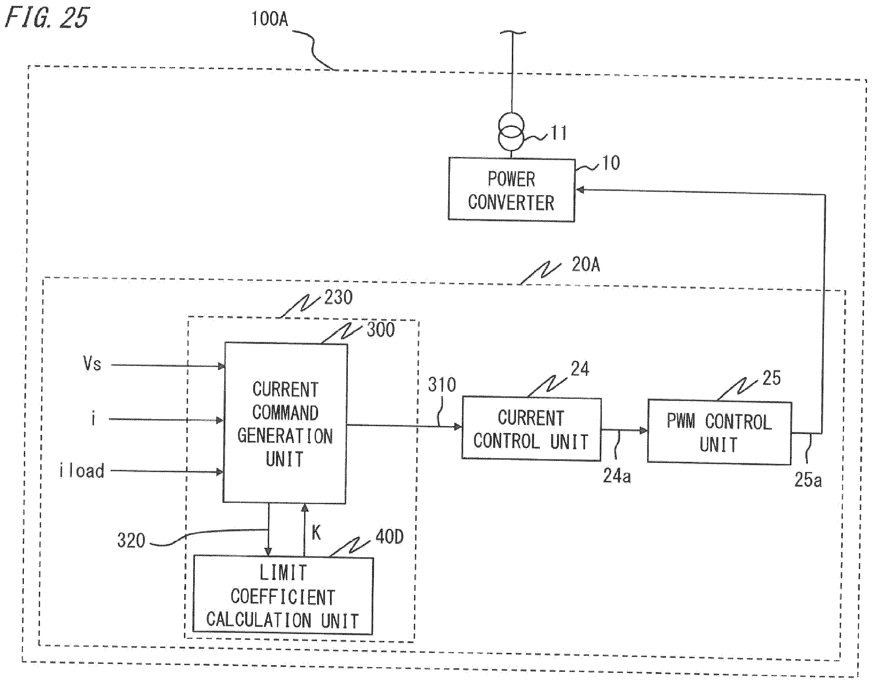

FIG. 25 is a block diagram showing a schematic configuration of a power conversion device 100A according to Embodiment 5. It is noted that the AC grid 1, the load 2, and the detectors 3, 4, 5 for voltage and currents are the same as those in the above Embodiment 1.

As shown in FIG. 25, a control circuit 20A includes a harmonic compensation unit 230, the current control unit 24, and the PWM control unit 25.

The harmonic compensation unit 230 includes a current command generation unit 300 and a limit coefficient calculation unit 40D. The current command generation unit 300 receives the values of the interconnection point voltage Vs from the voltage detector 3, the output current i from the current detector 5, and the load current iload from the current detector 4, and the limit coefficient K generated for each frequency component by the limit coefficient calculation unit 40D.

Then, the current command generation unit 300 generates a compensation current desired value 320 for each of the plurality of frequency components on the basis of the load current iload, and generates an output current command 310 including a compensation current command obtained by correcting the compensation current desired value 320 using the limit coefficient K and the first current command for the fundamental positive-phase-sequence component.

The limit coefficient calculation unit 40D receives the compensation current desired values 320 from the current command generation unit 300, and generates the limit coefficient K for each frequency component on the basis of the received values.

The configuration of the power conversion device 100A shown in FIG. 25 is applicable also to a case of outputting only harmonic compensation currents to perform harmonic compensation, as in an active filter or the like. In this case, the output current command 310 outputted from the harmonic compensation unit 230 coincides with the compensation current command.

### Embodiment 6

In the above embodiments, in the case of configuring the power converter 10 as a MMC, the interphase balance in output voltages of the converter cells 12 is preferentially controlled. In the case of the MMC of the single-star-connection type as shown in FIG. 4, zero-phase-sequence voltage Vzero is outputted for control of the interphase balance in the output voltages of the converter cells 12.

In Embodiment 6, a case of using the power converter 10B configured as the MMC of the single-star-connection type and outputting zero-phase-sequence voltage Vzero for interphase balance control in the power conversion device 100 of the above Embodiment 1, will be described.

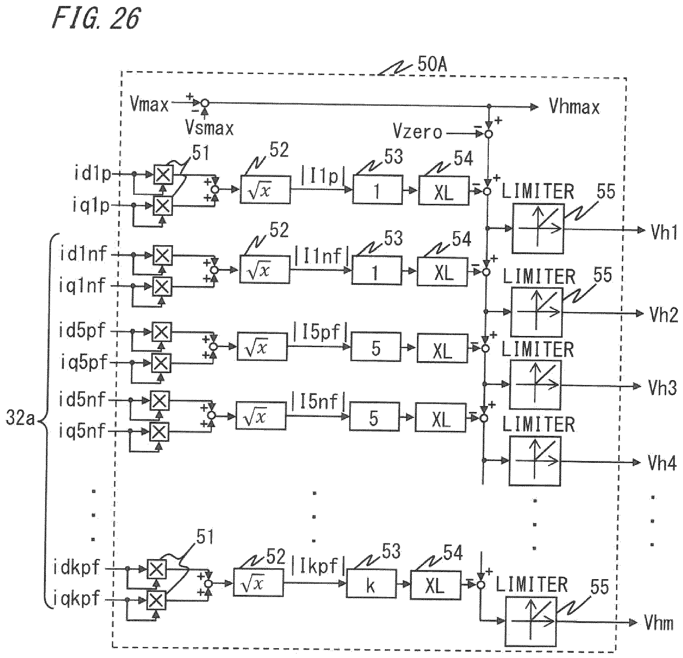

FIG. 26 shows a configuration of a voltage limitation value generation unit in a limit coefficient calculation unit according to Embodiment 6.

As shown in FIG. 26, in a voltage limitation value generation unit 50A in the limit coefficient calculation unit 40, the grid voltage maximum value Vsmax is subtracted from the maximum voltage Vmax that the power converter 10B can output, to calculate the voltage Vhmax that can be used for control of the power converter 10B, and further, the value of the zero-phase-sequence voltage Vzero is subtracted therefrom. Then, voltage to be allocated for each of the frequency components including the fundamental positive-phase-sequence component is subtracted, and as in the above Embodiment 1, the voltage upper limit values Vh1, Vh2, ..., Vhm are generated in a descending order of priorities.

The other control configurations are the same as those in the above Embodiment 1.

Thus, the generated voltage upper limit values Vh1, Vh2, ..., Vhm become voltages corrected by the zero-phase-sequence voltage Vzero. Therefore, also in the power conversion device 100 that outputs the zero-phase-sequence voltage Vzero to perform interphase balance control, the voltage and the current that the power converter 10B can output can be sufficiently used, the limit coefficient can be calculated in accordance with each order number of the compensation current, and harmonic compensation can be effectively performed for each harmonic order.

In the above description, the case of application to the above Embodiment 1 has been shown. However, the above configuration is applicable also to the other embodiments, whereby the same effects are obtained.

In the above embodiment, the case of the power converter 10B configured as the MMC of the single-star-connection type has been described. Meanwhile, in a case of the power converter 10, 10A configured as the MMC of the double-star-connection type or the MMC of the delta-connection type as shown in FIG. 2 or FIG. 3, circulation current Icir is outputted for interphase balance control.

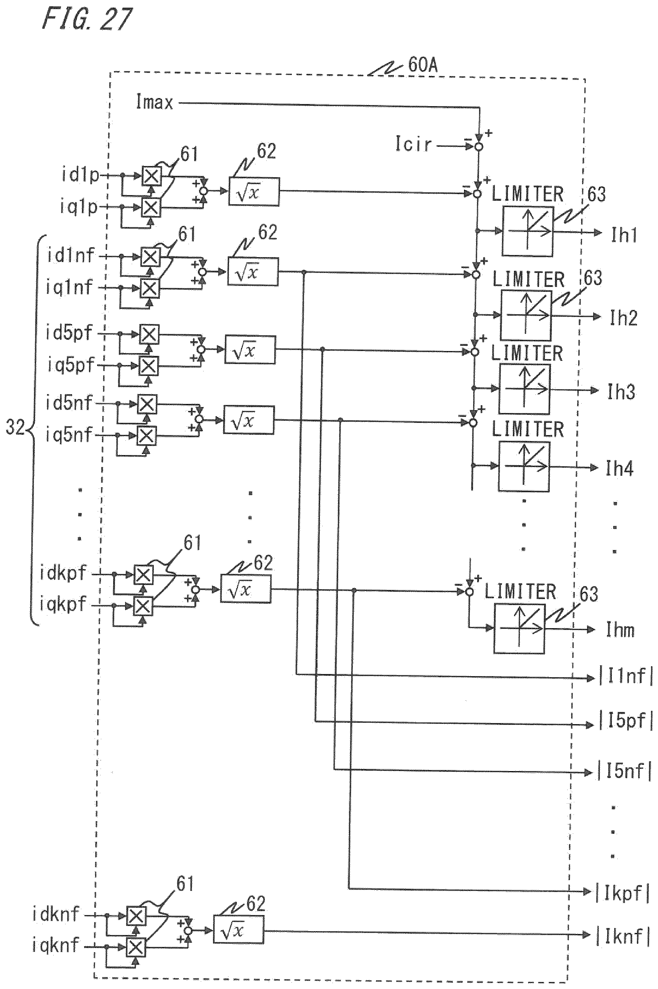

FIG. 27 shows a configuration of a current limitation value generation unit in a limit coefficient calculation unit according to another example of Embodiment 6. In this case, in the power conversion device 100 of the above Embodiment 1, the power converter 10, 10A configured as the MMC of the double-star-connection type or the delta-connection type is used, and the circulation current Icir is outputted for interphase balance control.

As shown in FIG. 27, a current limitation value generation unit 60A in the limit coefficient calculation unit 40 subtracts the value of the circulation current Icir from the maximum current Imax that the power converter 10, 10A can output. Then, current to be allocated for each of the frequency components including the fundamental positive-phase-sequence component is subtracted, and as in the above Embodiment 1, the current upper limit values Ih1, Ih2, ..., Ihm are generated in a descending order of priorities.

The other control configurations are the same as those in the above Embodiment 1.

Thus, the generated current upper limit values Ih1, Ih2, ..., Ihm become currents corrected by the circulation current Icir. Therefore, also in the power conversion device 100 that outputs the circulation current Icir to perform interphase balance control, the voltage and the current that the power converter 10, 10A can output can be sufficiently used, the limit coefficient can be calculated in accordance with each order number of the compensation current, and harmonic compensation can be effectively performed for each harmonic order.

Also in this case, the above configuration is applicable to not only the above Embodiment 1 but also the other embodiments, whereby the same effects are obtained.

### Embodiment 7

In the above embodiments, regarding the grid voltage maximum value Vsmax, if it is necessary to consider distortion of the grid voltage at the time of grid voltage disturbance, the grid voltage maximum value Vsmax can be generated considering voltage distortion for a desired frequency component.

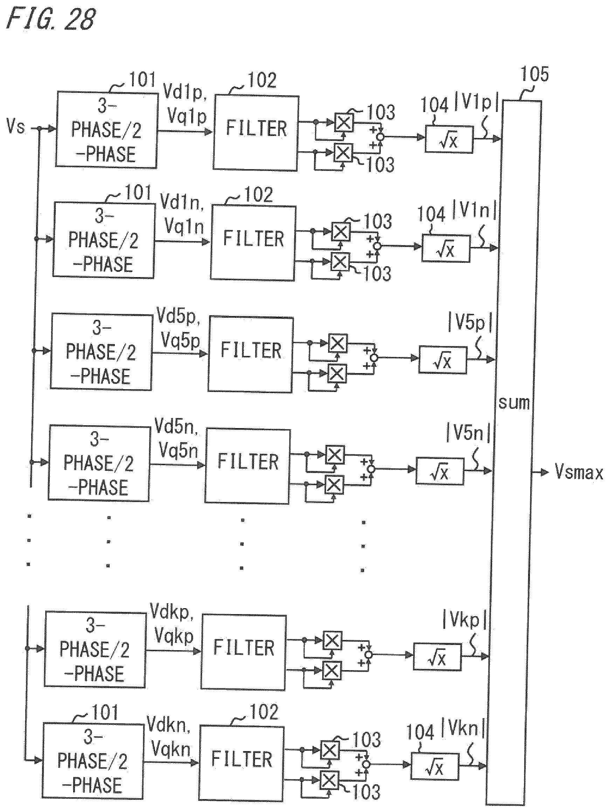

FIG. 28 shows a configuration of a circuit for calculating the grid voltage maximum value Vsmax which is the voltage maximum value of the AC grid 1, according to Embodiment 7.

As shown in FIG. 28, the three-phase interconnection point voltages Vs are subjected to rotational coordinate conversion by each of a plurality of coordinate conversion units 101, to be converted to DC voltages for the plurality of frequency components. The plurality of coordinate conversion units 101 are set with different phases for coordinate conversion. For example, in a case of performing conversion to the dq-axis voltages Vd1p, Vq1p for the fundamental positive-phase-sequence component, coordinate conversion is performed with a positive fundamental component phase, and in a case of performing conversion to the dq-axis voltages Vd1n, Vq1n for the fundamental negative-phase-sequence component, coordinate conversion is performed with a negative fundamental component phase.

In this case, as frequency components for which voltage distortion is considered, the fundamental positive-phase-sequence component, the fundamental negative-phase-sequence component, the fifth-order positive-phase-sequence component, the fifth-order negative-phase-sequence component, ..., the kth-order positive-phase-sequence component, and the kth-order negative-phase-sequence component are targeted, and the respective dq-axis voltages (Vd1n, Vq1n), (Vd5p, Vq5p), (Vd5n, Vq5n), ..., (Vdkp, Vqkp), and (Vdkn, Vqkn) are generated.

The dq-axis voltages generated for each frequency component pass a filter 102 by which harmonic components are removed from DC voltage. Then, regarding the values of the dq-axis voltages after the filter processing, the d-axis and q-axis voltages for each frequency component are squared by multipliers 103, and a square root of a sum obtained by adding the squared values is calculated by the square root calculator 104, thereby generating voltage amplitude values |V1p|, |V1n|, |V5p|, |V5n|, ..., |Vkp|, and |Vkn| for the respective frequency components. The total sum of the generated voltage amplitude values is calculated by a total sum calculator 105, thereby generating the grid voltage maximum value Vsmax.

Thus, also in the case where voltage distortion occurs in the AC grid 1 at the time of grid voltage disturbance, the grid voltage maximum value Vsmax can be reliably calculated, the voltage and the current that the power converter 10 can output can be sufficiently used, and harmonic compensation can be effectively performed.

In calculation for the grid voltage maximum value Vsmax considering voltage distortion, as long as the fundamental positive-phase-sequence component is included, the other frequency components may be any frequency components.

Although the invention is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the invention.

It is therefore understood that numerous modifications which have not been exemplified can be devised without departing from the scope of the present invention. For example, at least one of the constituent components may be modified, added, or eliminated. At least one of the constituent components mentioned in at least one of the preferred embodiments may be selected and combined with the constituent components mentioned in another preferred embodiment.

### DESCRIPTION OF THE REFERENCE CHARACTERS

- 1: AC grid
- 2: load
- 10: power converter
- 10A, 10B: power converter
- 10C: power converter
- 12, 12A: converter cell
- 20, 20A: control circuit
- 23, 23A: harmonic compensation unit
- 230: harmonic compensation unit
- 30, 30A: current command generation unit
- 300: current command generation unit
- 31: compensation current command
- 32, 32a: compensation current desired value
- 32b, 32c: compensation current desired value
- 320: compensation current desired value
- 40, 40A: limit coefficient calculation unit
- 40B, 40C: limit coefficient calculation unit
- 40D: limit coefficient calculation unit
- 100, 100A: power conversion device
- 310: output current command
- iload: load current
- Imax: maximum current
- Ih1 to Ihm: current upper limit value
- Ih1c, Ihh: current upper limit value
- Ih1a to Ihma: first current value
- Ihlb, Ihha: first current value
- |I1nf| to |Iknf|: second current value
- Ih: second current value
- Iha: third current value
- id1p: active current command
- iq1p: reactive current command
- Icir: circulation current
- K, Kh: limit coefficient
- K1n to Kkn: limit coefficient
- Vmax: maximum voltage
- Vh1 to Vhm: voltage upper limit value
- Vhh: voltage upper limit value
- Vsmax: grid voltage maximum value
- Vzero: zero-phase-sequence voltage
- XL: fundamental impedance

## Claims

1. A power conversion device (100, 100A) comprising:
- a power converter (10, 10A-10C) connected to an AC grid (1) to which a load (2) is connected; and
- a control circuit (20, 20A) for performing output control of the power converter (10, 10A-10C),
wherein
the control circuit (20, 20A) includes a harmonic compensation unit (23, 23A, 230) for compensating for harmonic current contained in load current (iload) by compensation current, and is configured to control the compensation current in output current (i) of the power converter (10, 10A-10C), and
the harmonic compensation unit (23, 23A, 230) includes
a limit coefficient calculation unit (40, 40A-40D) which is configured to generate a limit coefficient (K) for each frequency components and
a current command generation unit (30, 30A, 300) which is configured to receive the limit coefficient (K), generate a compensation current desired value (32, 32a-32c, 320) for each of a plurality of frequency components, and correct each compensation current desired value (32, 32a-32c, 320) using the corresponding limit coefficient (K), to generate a compensation current command (31) for each frequency component,
wherein the limit coefficient calculation unit (40, 40A-40D) is configured to calculate each limit coefficient (K), on the basis of the compensation current desired value (32, 32a-32c, 320) for each of the plurality of frequency components, and maximum voltage (Vmax) and maximum current (Imax) that the power converter (10, 10A-10C) is able to output.

2. The power conversion device (100, 100A) according to claim 1,
wherein the harmonic compensation unit (23, 23A, 230) is configured to generate the compensation current desired value (32, 32a-32c, 320) for each of the plurality of frequency components on the basis of the load current (iload).

3. The power conversion device (100, 100A) according to claim 1 or 2,
wherein the harmonic compensation unit (23, 23A, 230) is configured to multiply each compensation current desired value (32, 32a-32c, 320) by the corresponding limit coefficient (K), to generate the compensation current command (31) for each frequency component.

4. The power conversion device (100, 100A) according to any one of claims 1 to 3,
wherein for a frequency component that is a compensation target, the harmonic compensation unit (23, 23A) is configured to calculate a voltage upper limit value (Vh1-Vhm, Vhh) and a current upper limit value (Ih1-Ihm, Ih1c, Ihh), to extract a minimum value among a first current value (Ih1a-Ihma, Ih1b, Ihha) calculated from the voltage upper limit value (Vh1-Vhm, Vhh) and an impedance based on the frequency, the current upper limit value (Ih1-Ihm, Ih1c, Ihh), and a second current value (|I1nf|-|Iknf|, Ih) based on an amplitude of the compensation current desired value (32, 32a-32c), and to divides the minimum value by the second current value (|I1nf|-|Iknf|, Ih), to calculate the limit coefficient (K).

5. The power conversion device (100, 100A) according to claim 4,
wherein the harmonic compensation unit (23, 23A), with priorities set for respective frequency components that are compensation targets, is configured to calculate the voltage upper limit value (Vh1-Vhm) and the current upper limit value (Ih1-Ihm) in a descending order of the priorities.

6. The power conversion device (100) according to claim 5,
wherein the control circuit (20) is configured to generate a first current command for a fundamental positive-phase-sequence component, and to add the first current command and the compensation current command, to generate an output current command for the power converter (10, 10A-10C), and
the harmonic compensation unit (23) is configured to calculate the voltage upper limit value (Vh1) and the current upper limit value (Ih1) for the frequency component of which the priority is at a first rank, on the basis of the maximum voltage (Vmax) and the maximum current (Imax), and the first current command.

7. The power conversion device (100, 100A) according to claim 5,
wherein the harmonic compensation unit (23A) is configured to calculate the limit coefficients (K) using the voltage upper limit values (Vh2-Vhm) and the current upper limit values (Ih2-Ihm) only for the frequency components of which the priorities are at a second rank or below, and to calculate the limit coefficient (K) individually for the frequency component of which the priority is at a first rank.

8. The power conversion device (100, 100A) according to claim 7,
wherein the harmonic compensation unit (23A) is configured to calculate the voltage upper limit value (Vh2) and the current upper limit value (Ih2) for the frequency component of which the priority is at the second rank, on the basis of the maximum voltage (Vmax) and the maximum current (Imax), and maximum current values respectively set for a fundamental positive-phase-sequence component and the frequency component of which the priority is at the first rank.

9. The power conversion device (100, 100A) according to any one of claims 5 to 8,
wherein for each frequency component that is the compensation target, the harmonic compensation unit (23, 23A) is configured to calculate voltage and current to be allocated for the frequency component, and to subtract the calculated voltage and current respectively from the voltage upper limit value (Vh1-Vhm) and the current upper limit value (Ih1-Ihm), to calculate the voltage upper limit value (Vh1-Vhm) and the current upper limit value (Ih1-Ihm) for the frequency component of which the priority is at a next rank.

10. The power conversion device (100, 100A) according to any one of claims 5 to 8,
wherein among the priorities set for the respective frequency components that are the compensation targets, priorities for a plurality of frequency components at a second rank or below are set at the same rank, and
for a group of the frequency components at the same rank of priority that are the compensation targets, the harmonic compensation unit (23, 23A) is configured to
calculate the voltage upper limit value (Vhh) and the current upper limit value (Ihh),
on the basis of amplitudes of the compensation current desired values (32) for the group of frequency components, to calculate the second current value (Ih) which is an amplitude sum, and a third current value (Iha) which is a sum of the amplitudes imparted with weights based on the respective frequencies,
to extract the minimum value among: the first current value (Ihha) based on the second current value (Ih), the third current value (Iha), the voltage upper limit value (Vhh), and the impedance; the current upper limit value (Ihh); and the second current value (Ih), and
to divide the minimum value by the second current value (Ih), to calculate the limit coefficient (K).

11. The power conversion device (100, 100A) according to any one of claims 5 to 10,
wherein the frequency component of which the priority is at a first rank is a fundamental negative-phase-sequence component.

12. The power conversion device (100, 100A) according to any one of claims 4 to 11,
wherein the maximum voltage (Vmax) to be used for calculation by the harmonic compensation unit (23, 23A) is corrected by voltage of the AC grid (1) to which the power converter (10, 10A-10C) is connected.

13. The power conversion device (100, 100A) according to any one of claims 4 to 12,
wherein the power converter (10B) is configured as a modular multilevel converter in which a plurality of phases each including a plurality of converter cells (12, 12A) are connected by single star connection, and
the control circuit (20) is configured to control the converter cells (12, 12A) so as to output zero-phase-sequence voltage (Vzero) for interphase balance, and the harmonic compensation unit (23, 23A) is configured to use the voltage upper limit value (Vh1-Vhm) corrected by the zero-phase-sequence voltage (Vzero).

14. The power conversion device (100, 100A) according to any one of claims 4 to 12,
wherein the power converter (10A) is configured as a modular multilevel converter in which a plurality of phases each including a plurality of converter cells (12, 12A) are connected by delta connection, and
the control circuit (20, 20A) is configured to control the converter cells (12, 12A) so as to output circulation current (Icir) for interphase balance, and the harmonic compensation unit (23, 23A) is configured to use the current upper limit value (Ih1-Ihm) corrected by the circulation current (Icir).

15. The power conversion device (100, 100A) according to any one of claims 4 to 12,
wherein the power converter (10) is configured as a modular multilevel converter in which a plurality of phases each including a plurality of converter cells (12, 12A) are connected by double star connection, and
the control circuit (20, 20A) is configured to control the converter cells (12, 12A) so as to output circulation current (Icir) for interphase balance, and the harmonic compensation unit (23, 23A) is configured to use the current upper limit value (Ih1-Ihm) corrected by the circulation current (Icir).

## Patentansprüche

1. Stromrichtervorrichtung (100, 100A), die das Folgende aufweist:
- einen Stromrichter (10, 10A-10C), der mit einem AC-Netz (1) verbunden ist, mit dem eine Last (2) verbunden ist; und
- eine Steuerschaltung (20, 20A) zum Durchführen einer Ausgangssteuerung des Stromrichters (10, 10A-10C),
wobei
die Steuerschaltung (20, 20A) eine Oberschwingungskompensationseinheit (23, 23A, 230) zum Kompensieren von Oberschwingungsstrom, der in Laststrom (iload) enthalten ist, durch einen Kompensationsstrom aufweist, und die dazu konfiguriert ist, den Kompensationsstrom in einem Ausgangsstrom (i) des Stromrichters (10, 10A-10C) zu steuern, und
die Oberschwingungskompensationseinheit (23, 23A, 230) das Folgende aufweist:
eine Grenzkoeffizienten-Berechnungseinheit (40, 40A-40D), die dazu konfiguriert ist, für jede Frequenzkomponente einen Grenzkoeffizienten (K) zu erzeugen, und
eine Strombefehls-Erzeugungseinheit (30, 30A, 300), die dazu konfiguriert ist, den Grenzkoeffizienten (K) zu empfangen, für jede von einer Vielzahl von Frequenzkomponenten einen Kompensationsstrom-Sollwert (32, 32a-32c, 320) zu erzeugen und jeden Kompensationsstrom-Sollwert (32, 32a-32c, 320) unter Verwendung des entsprechenden Grenzkoeffizienten (K) zu korrigieren, um für jede Frequenzkomponente einen Kompensationsstrom-Befehl (31) zu erzeugen,
wobei die Grenzkoeffizienten-Berechnungseinheit (40, 40A-40D) dazu konfiguriert ist, jeden Grenzkoeffizienten (K) basierend auf dem Kompensationsstrom-Sollwert (32, 32a-32c, 320) für jede der Vielzahl von Frequenzkomponenten sowie die maximale Spannung (Vmax) und den maximalen Strom (Imax) zu berechnen, die bzw. den der Stromrichter (10, 10A-10C) ausgeben kann.

2. Leistungswandlungsvorrichtung (100, 100A) nach Anspruch 1,
wobei die Oberschwingungskompensationseinheit (23, 23A, 230) dazu konfiguriert ist, den Kompensationsstrom-Sollwert (32, 32a-32c, 320) für jede der Vielzahl von Frequenzkomponenten basierend auf dem Laststrom (iload) zu erzeugen.

3. Stromrichtervorrichtung (100, 100A)
nach Anspruch 1 oder 2,
wobei die Oberschwingungskompensationseinheit (23, 23A, 230) dazu konfiguriert ist, den jeweiligen Kompensationsstrom-Sollwert (32, 32a-32c, 320) mit dem entsprechenden Grenzkoeffizienten (K) zu multiplizieren, um den Kompensationsstrombefehl (31) für die jeweilige Frequenzkomponente zu erzeugen.

4. Stromrichtervorrichtung (100, 100A)
nach einem der Ansprüche 1 bis 3,
wobei die Oberschwingungskompensationseinheit (23, 23A) dazu konfiguriert ist, für eine Frequenzkomponente, die ein Kompensationsziel ist,
- einen Spannungs-Obergrenzwert (Vh1-Vhm, Vhh) und einen Strom-Obergrenzwert (Ih1-Ihm, Ih1c, Ihh) zu berechnen,
- einen Minimalwert unter den folgenden Werten zu extrahieren:
- einem ersten Stromwert (Ih1a-Ihma, Ih1b, Ihha), der aus dem Spannungs-Obergrenzwert (Vh1-Vhm, Vhh) und einer auf der Frequenz basierenden Impedanz berechnet worden ist,
- dem Strom-Obergrenzwert (Ih1-Ihm, Ih1c, Ihh) und
- einem zweiten Stromwert (|I1nf|-|Iknf|, Ih), der auf einer Amplitude des Kompensationsstrom-Sollwerts (32, 32a-32c) basiert, und
- den Minimalwert durch den zweiten Stromwert (|I1nf|-|Iknf|, Ih) zu dividieren, um den Grenzkoeffizienten (K) zu berechnen.

5. Stromrichtervorrichtung (100, 100A) nach Anspruch 4,
wobei die Oberschwingungskompensationseinheit (23, 23A), bei der Prioritäten für die jeweiligen Frequenzkomponenten vorgegeben sind, die Kompensationsziele sind, dazu konfiguriert ist, den Spannungs-Obergrenzwert (Vh1-Vhm) und den Strom-Obergrenzwert (Ih1-Ihm) in einer absteigenden Reihenfolge der Prioritäten zu berechnen.

6. Stromrichtervorrichtung (100) nach Anspruch 5,
wobei die Steuerschaltung (20) dazu konfiguriert ist, einen ersten Strombefehl für eine Grundkomponente mit positiver Phasenfolge zu erzeugen und den ersten Strombefehl mit dem Kompensationsstrombefehl zu addieren, um einen Ausgangsstrombefehl für den Stromrichter (10, 10A-10C) zu erzeugen, und
die Oberschwingungskompensationseinheit (23) dazu konfiguriert ist, den Spannungs-Obergrenzwert (Vh1) und den Strom-Obergrenzwert (Ih1) für die Frequenzkomponente, deren Priorität auf einem ersten Rang steht, basierend auf der maximalen Spannung (Vmax), dem maximalen Strom (Imax) und dem ersten Strombefehl zu berechnen.

7. Stromrichtervorrichtung (100, 100A) nach Anspruch 5,
wobei die Oberschwingungskompensationseinheit (23A) dazu konfiguriert ist, die Grenzkoeffizienten (K) unter Verwendung der Spannungs-Obergrenzwerte (Vh2-Vhm) und der Strom-Obergrenzwerte (Ih2-Ihm) nur für diejenigen Frequenzkomponenten zu berechnen, deren Prioritäten auf einem zweiten Rang oder darunter stehen, und den Grenzkoeffizienten (K) für diejenige Frequenzkomponente, deren Priorität auf einem ersten Rang steht, individuell zu berechnen.

8. Stromrichtervorrichtung (100, 100A) nach Anspruch 7,
wobei die Oberschwingungskompensationseinheit (23A) dazu konfiguriert ist, den Spannungs-Obergrenzwert (Vh2) und den Strom-Obergrenzwert (Ih2) für die Frequenzkomponente zu berechnen, deren Priorität auf dem zweiten Rang steht, und zwar basierend auf der maximalen Spannung (Vmax) und dem maximalen Strom (Imax), sowie maximalen Stromwerten, die jeweils für eine Grundkomponente mit positiver Phasenfolge und diejenige Frequenzkomponente vorgegeben sind, deren Priorität auf dem ersten Rang steht.

9. Stromrichtervorrichtung (100, 100A)
nach einem der Ansprüche 5 bis 8,
wobei die Oberschwingungskompensationseinheit (23, 23A) dazu konfiguriert ist, für jede Frequenzkomponente, die das Kompensationsziel ist, diejenige Spannung und denjenigen Strom zu berechnen, die bzw. der der Frequenzkomponente zuzuordnen ist, und die berechnete Spannung und den berechneten Strom vom Spannungs-Obergrenzwert (Vh1-Vhm) und vom Strom-Obergrenzwert (Ih1-Ihm) zu subtrahieren, um den Spannungs-Obergrenzwert (Vh1-Vhm) und den Strom-Obergrenzwert (Ih1-Ihm) für diejenige Frequenzkomponente zu berechnen, deren Priorität auf einem nächsten Rang steht.

10. Stromrichtervorrichtung (100, 100A)
nach einem der Ansprüche 5 bis 8,
wobei unter den Prioritäten, die für die jeweiligen Frequenzkomponenten vorgegeben sind, welche die Kompensationsziele sind, Prioritäten für eine Vielzahl von Frequenzkomponenten, die auf einem zweiten Rang oder darunter stehen, auf den gleichen Rang festgesetzt werden, und
für eine Gruppe der Frequenzkomponenten mit dem gleichen Prioritätsrang, welche die Kompensationsziele sind, die Oberschwingungskompensationseinheit (23, 23A) dazu konfiguriert ist,
den Spannungs-Obergrenzwert (Vhh) und den Strom-Obergrenzwert (Ihh) zu berechnen,
basierend auf Amplituden der Kompensationsstrom-Sollwerte (32) für die Gruppe von Frequenzkomponenten den zweiten Stromwert (Ih), der eine Amplitudensumme ist, sowie einen dritten Stromwert (Iha) zu berechnen, der eine Summe der Amplituden ist, die mit auf den jeweiligen Frequenzen basierenden Gewichten versehen sind,
den Minimalwert unter den folgenden Werten zu extrahieren: dem ersten Stromwert (Ihha), und zwar basierend auf dem zweiten Stromwert (Ih), dem dritten Stromwert (Iha), dem Spannungs-Obergrenzwert (Vhh) und der Impedanz; dem Strom-Obergrenzwert (Ihh); und dem zweiten Stromwert (Ih), und
den Minimalwert durch den zweiten Stromwert (Ih) zu dividieren, um den Grenzkoeffizienten (K) zu berechnen.

11. Stromrichtervorrichtung (100, 100A)
nach einem der Ansprüche 5 bis 10,
wobei die Frequenzkomponente, deren Priorität auf einem ersten Rang steht, eine Grundkomponente mit negativer Phasenfolge ist.

12. Stromrichtervorrichtung (100, 100A)
nach einem der Ansprüche 4 bis 11,
wobei die Maximalspannung (Vmax), die von der Oberschwingungskompensationseinheit (23, 23A) zur Berechnung zu verwenden ist, anhand einer Spannung des AC-Netzes (1) korrigiert ist, mit dem der Stromrichter (10, 10A-10C) verbunden ist.

13. Stromrichtervorrichtung (100, 100A)
nach einem der Ansprüche 4 bis 12,
wobei der Stromrichter (10B) als ein modularer Mehrpegel-wandler konfiguriert ist, in dem eine Vielzahl von Phasen, die jeweils eine Vielzahl von Wandlerzellen (12, 12A) aufweisen, mittels einer Einzelsternschaltung verbunden sind, und
die Steuerschaltung (20) dazu konfiguriert ist, die Wandlerzellen (12, 12A) so zu steuern, dass eine Nullphasenfolge-Spannung (Vzero) zum Zwischenphasenausgleich ausgegeben wird, und die Oberschwingungskompensationseinheit (23, 23A) dazu konfiguriert ist, den Spannungs-Obergrenzwert (Vh1-Vhm) zu verwenden, der durch die Nullphasenfolge-Spannung (Vzero) korrigiert ist.

14. Stromrichtervorrichtung (100, 100A)
nach einem der Ansprüche 4 bis 12,
wobei der Stromrichter (10A) als ein modularer Mehrpegel-wandler konfiguriert ist, in dem eine Vielzahl von Phasen, die jeweils eine Vielzahl von Wandlerzellen (12, 12A) aufweisen, mittels einer Dreieckschaltung verbunden sind, und
die Steuerschaltung (20, 20A) dazu konfiguriert ist, die Wandlerzellen (12, 12A) so zu steuern, dass ein Zirkulationsstrom (Icir) zum Zwischenphasenausgleich ausgegeben wird, und die Oberschwingungskompensationseinheit (23, 23A) dazu konfiguriert ist, den Strom-Obergrenzwert (Ih1-Ihm) zu verwenden, der durch den Zirkulationsstrom (Icir) korrigiert ist.

15. Stromrichtervorrichtung (100, 100A)
nach einem der Ansprüche 4 bis 12,
wobei der Stromrichter (10) als ein modularer Mehrpegel-wandler konfiguriert ist, in dem eine Vielzahl von Phasen, die jeweils eine Vielzahl von Wandlerzellen (12, 12A) aufweisen, mittels einer Doppelsternschaltung verbunden sind, und
die Steuerschaltung (20, 20A) dazu konfiguriert ist, die Wandlerzellen (12, 12A) so zu steuern, dass ein Zirkulationsstrom (Icir) zum Zwischenphasenausgleich ausgegeben wird, und die Oberschwingungskompensationseinheit (23, 23A) dazu konfiguriert ist, den Strom-Obergrenzwert (Ih1-Ihm) zu verwenden, der durch den Zirkulationsstrom (Icir) korrigiert ist.

## Revendications

1. Dispositif de conversion de puissance (100, 100A) comprenant :
- un convertisseur de puissance (10, 10A-10C) connecté à un réseau électrique à courant alternatif (1) auquel est connectée une charge (2) ; et
- un circuit de commande (20, 20A) destiné à assurer la commande de sortie du convertisseur de puissance (10, 10A-10C),
dans lequel
le circuit de commande (20, 20A) inclut une unité de compensation d'harmoniques (23, 23A, 230) destinée à compenser le courant harmonique contenu dans le courant de charge (iload) par un courant de compensation, et est configuré pour commander le courant de compensation dans le courant de sortie (i) du convertisseur de puissance (10, 10A-10C), et
l'unité de compensation d'harmoniques (23, 23A, 230) inclut :
une unité de calcul de coefficients limites (40, 40A-40D) qui est configurée pour générer un coefficient limite (K) pour chacune des composantes de fréquence, et
une unité de génération de consigne de courant (30, 30A, 300) qui est configurée pour recevoir le coefficient limite (K), générer une valeur souhaitée de courant de compensation (32, 32a-32c, 320) pour chacune d'une pluralité de composantes de fréquence, et corriger chaque valeur souhaitée de courant de compensation (32, 32a-32c, 320) à l'aide du coefficient limite correspondant (K) afin de générer une consigne de courant de compensation (31) pour chaque composante de fréquence,
dans lequel l'unité de calcul de coefficients limites (40, 40A-40D) est configurée pour calculer chaque coefficient limite (K), sur la base de la valeur souhaitée de courant de compensation (32, 32a-32c, 320) pour chacune de la pluralité de composantes de fréquence, ainsi que la tension maximale (Vmax) et le courant maximal (Imax) que le convertisseur de puissance (10, 10A-10C) est capable de fournir.

2. Dispositif de conversion de puissance (100, 100A) selon la revendication 1,
dans lequel l'unité de compensation d'harmoniques (23, 23A, 230) est configurée pour générer la valeur souhaitée de courant de compensation (32, 32a-32c, 320) pour chacune de la pluralité de composantes de fréquence sur la base du courant de charge (iload).

3. Dispositif de conversion de puissance (100, 100A)
selon la revendication 1 ou 2,
dans lequel l'unité de compensation d'harmoniques (23, 23A, 230) est configurée pour multiplier chaque valeur souhaitée de courant de compensation (32, 32a-32c, 320) par le coefficient limite correspondant (K) afin de générer la consigne de courant de compensation (31) pour chaque composante de fréquence.

4. Dispositif de conversion de puissance (100, 100A)
selon l'une quelconque des revendications 1 à 3,
dans lequel, pour une composante de fréquence constituant une cible de compensation, l'unité de compensation d'harmoniques (23, 23A) est configurée pour calculer une valeur limite supérieure de tension (Vh1-Vhm, Vhh) et une valeur limite supérieure de courant (Ih1-Ihm, Ih1c, Ihh), pour extraire une valeur minimale parmi une première valeur de courant (Ih1a-Ihma, Ih1b, Ihha) calculée à partir de la valeur limite supérieure de tension (Vh1-Vhm, Vhh) et d'une impédance basée sur la fréquence, la valeur limite supérieure de courant (Ih1-Ihm, Ih1c, Ihh), et une deuxième valeur de courant (|I1nf| - |Iknf|, Ih) basée sur une amplitude de la valeur souhaitée de courant de compensation (32, 32a-32c), et pour diviser la valeur minimale par la deuxième valeur de courant (|I1nf| - |Iknf|, Ih) afin de calculer le coefficient limite (K).

5. Dispositif de conversion de puissance (100, 100A) selon la revendication 4,
dans lequel l'unité de compensation d'harmoniques (23, 23A), pour laquelle des priorités sont définies pour les composantes de fréquence respectives qui constituent des cibles de compensation, est configurée pour calculer la valeur limite supérieure de tension (Vh1-Vhm) et la valeur limite supérieure de courant (Ih1-Ihm) par ordre décroissant des priorités.

6. Dispositif de conversion de puissance (100) selon la revendication 5,
dans lequel le circuit de commande (20) est configuré pour générer une première consigne de courant pour une composante à séquence de phases positive fondamentale, et pour additionner la première consigne de courant et la consigne de courant de compensation afin de générer une consigne de courant de sortie pour le convertisseur de puissance (10, 10A-10C), et
l'unité de compensation d'harmoniques (23) est configurée pour calculer la valeur limite supérieure de tension (Vh1) et la valeur limite supérieure de courant (Ih1) pour la composante de fréquence dont la priorité est à un premier rang sur la base de la tension maximale (Vmax) et du courant maximal (Imax), ainsi que de la première consigne de courant.

7. Dispositif de conversion de puissance (100, 100A) selon la revendication 5,
dans lequel l'unité de compensation d'harmoniques (23A) est configurée pour calculer les coefficients limites (K) en utilisant les valeurs limites supérieures de tension (Vh2-Vhm) et les valeurs limites supérieures de courant (Ih2-Ihm) uniquement pour les composantes de fréquence dont les priorités sont à un deuxième rang ou inférieures, et pour calculer le coefficient limite (K) individuellement pour la composante de fréquence dont la priorité est à un premier rang.

8. Dispositif de conversion de puissance (100, 100A) selon la revendication 7,
dans lequel l'unité de compensation d'harmoniques (23A) est configurée pour calculer la valeur limite supérieure de tension (Vh2) et la valeur limite supérieure de courant (Ih2) pour la composante de fréquence dont la priorité est au deuxième rang sur la base de la tension maximale (Vmax) et du courant maximal (Imax), et de valeurs maximales de courant respectivement définies pour une composante à séquence de phases positive fondamentale et la composante de fréquence dont la priorité est au premier rang.

9. Dispositif de conversion de puissance (100, 100A)
selon l'une quelconque des revendications 5 à 8,
dans lequel, pour chaque composante de fréquence constituant la cible de compensation, l'unité de compensation d'harmoniques (23, 23A) est configurée pour calculer la tension et le courant à allouer à ladite composante de fréquence, et pour soustraire respectivement la tension et le courant calculés de la valeur limite supérieure de tension (Vh1-Vhm) et de la valeur limite supérieure de courant (Ih1-Ihm) afin de calculer la valeur limite supérieure de tension (Vh1-Vhm) et la valeur limite supérieure de courant (Ih1-Ihm) pour la composante de fréquence dont la priorité est à un rang suivant.

10. Dispositif de conversion de puissance (100, 100A)
selon l'une quelconque des revendications 5 à 8,
dans lequel, parmi les priorités définies pour les composantes de fréquence respectives qui constituent les cibles de compensation, les priorités pour une pluralité de composantes de fréquence à un deuxième rang ou inférieur sont définies au même rang, et
pour un groupe de composantes de fréquence au même rang de priorité qui constituent les cibles de compensation, l'unité de compensation d'harmoniques (23, 23A) est configurée pour :
calculer la valeur limite supérieure de tension (Vhh) et la valeur limite supérieure de courant (Ihh),
sur la base des amplitudes des valeurs souhaitées de courant de compensation (32) pour le groupe de composantes de fréquence, pour calculer la deuxième valeur de courant (Ih) qui est une somme d'amplitudes, et une troisième valeur de courant (Iha) qui est une somme des amplitudes pondérées sur la base des fréquences respectives,
extraire la valeur minimale parmi : la première valeur de courant (Ihha) sur la base de la deuxième valeur de courant (Ih), de la troisième valeur de courant (Iha), de la valeur limite supérieure de tension (Vhh) et de l'impédance ; la valeur limite supérieure de courant (Ihh) ; et la deuxième valeur de courant (Ih), et
diviser la valeur minimale par la deuxième valeur de courant (Ih) afin de calculer le coefficient limite (K).

11. Dispositif de conversion de puissance (100, 100A)
selon l'une quelconque des revendications 5 à 10,
dans lequel la composante de fréquence dont la priorité est à un premier rang est une composante à séquence de phases négative fondamentale.

12. Dispositif de conversion de puissance (100, 100A)
selon l'une quelconque des revendications 4 à 11,
dans lequel la tension maximale (Vmax) à utiliser pour le calcul par l'unité de compensation d'harmoniques (23, 23A) est corrigée par la tension du réseau à courant alternatif (1) auquel le convertisseur de puissance (10, 10A-10C) est connecté.

13. Dispositif de conversion de puissance (100, 100A)
selon l'une quelconque des revendications 4 à 12,
dans lequel le convertisseur de puissance (10B) est configuré comme un convertisseur modulaire à plusieurs niveaux dans lequel une pluralité de phases incluant chacune une pluralité de cellules de convertisseur (12, 12A) sont connectées en étoile simple, et
le circuit de commande (20) est configuré pour commander les cellules de convertisseur (12, 12A) de manière à produire une tension homopolaire (Vzero) pour l'équilibre entre phases, et l'unité de compensation d'harmoniques (23, 23A) est configurée pour utiliser la valeur limite supérieure de tension (Vh1-Vhm) corrigée par la tension homopolaire (Vzero).

14. Dispositif de conversion de puissance (100, 100A)
selon l'une quelconque des revendications 4 à 12,
dans lequel le convertisseur de puissance (10A) est configuré comme un convertisseur modulaire à plusieurs niveaux dans lequel une pluralité de phases incluant chacune une pluralité de cellules de convertisseur (12, 12A) sont connectées en triangle, et
le circuit de commande (20, 20A) est configuré pour commander les cellules de convertisseur (12, 12A) de manière à produire un courant de circulation (Icir) pour l'équilibre entre phases, et l'unité de compensation d'harmoniques (23, 23A) est configurée pour utiliser la valeur limite supérieure de courant (Ih1-Ihm) corrigée par le courant de circulation (Icir).

15. Dispositif de conversion de puissance (100, 100A)
selon l'une quelconque des revendications 4 à 12,
dans lequel le convertisseur de puissance (10) est configuré comme un convertisseur modulaire à plusieurs niveaux dans lequel une pluralité de phases incluant chacune une pluralité de cellules de convertisseur (12, 12A) sont connectées en double étoile, et
le circuit de commande (20, 20A) est configuré pour commander les cellules de convertisseur (12, 12A) de manière à produire un courant de circulation (Icir) pour l'équilibre entre phases, et l'unité de compensation d'harmoniques (23, 23A) est configurée pour utiliser la valeur limite supérieure de courant (Ih1-Ihm) corrigée par le courant de circulation (Icir).
